# EUROPEAN PATENT SPECIFICATION

(11) **EP 3 514 885 B1**
(45) Date of publication and mention of the grant of the patent: **04.10.2023**
(21) Application number: 17850618.4
(22) Date of filing: 16.08.2017
(51) Int. Cl.: H01M 10/6552, H01M 10/613, H01M 10/625, H01M 10/6551, H01M 10/6563, H01M 10/42, H01M 10/6556, H01M 50/204, H01M 50/262, H01M 50/271, H01M 50/296

(54) **STORAGE BATTERY MODULE, STORAGE BATTERY UNIT, AND VEHICULAR POWER STORAGE DEVICE**
SPEICHERBATTERIEMODUL, SPEICHERBATTERIEEINHEIT UND ENERGIESPEICHERVORRICHTUNG FÜR EIN FAHRZEUG
MODULE DE BATTERIE DE STOCKAGE, UNITÉ DE BATTERIE DE STOCKAGE ET DISPOSITIF DE STOCKAGE D'ÉNERGIE DE VÉHICULE

(30) Priority: 16.09.2016 JP 2016182434
(43) Date of publication of application: 24.07.2019
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: KAMIJO Mototsugu, Kawasaki-shi Kanagawa 212-8585 (JP); KANAYAMA Yohsuke, Kawasaki-shi Kanagawa 212-8585 (JP)
(74) Representative: AWA Sweden AB
(86) International application number: PCT/JP2017/029449
(87) International publication number: WO 2018/051712

(56) References cited:
- WO-A1-2015/041149
- WO-A1-2016/042783
- JP-A- 2014 514 690
- US-A- 5 806 803
- US-A1- 2009 263 708
- US-A1- 2011 117 410
- US-B1- 9 149 896

## Description

### FIELD

An embodiment of the present invention relates to a storage battery module, a storage battery unit, and a power storage device of a vehicle.

### BACKGROUND

Power storage devices for vehicles such as railroad vehicles supply driving power and auxiliary device electric power. There are also power storage devices having a constitution in which a storage battery configured to supply power and a heat-exchanger configured to discharge the heat of the storage battery outside of the casing are integrally combined into a module as a power storage device. However, space is taken up by a power storage device for a vehicle which requires a plurality of power storage devices when a plurality of power storage devices having the above-described constitution are arranged. For this reason, the entire power storage device for a vehicle becomes large, which makes it impossible to save space in some cases. Previous patent literature US 5 806 803 A discloses a heat pipe network for a satellite or spacecraft wherein the network is constructed from formed and straight heat pipes securely connected with a highly conductive material. Further, patent literature US 2011/117410 A1 discloses a battery pack and a heatsink frame, the battery pack including a heatsink member, a plurality of battery cells, and a fixing member. Patent literature US 2009/263708 A1 discloses a system and method of integrated thermal management for a multi-cell battery pack. Patent literature US 9 149 896 B1 discloses a thermal control, truss-plate apparatus and method. Patent literature WO 2016/042783 A1 discloses a vehicular storage battery device which releases heat generated by repeated electrical charging and discharging. Patent literature JP 2014 514690 A discloses a battery cooling system and a battery rack applied thereto, and more particularly a battery cooling system in which a Z-type cooling channel is introduced, and a battery rack applied thereto. Patent literature WO 2015/041149 A1 discloses a cell heat dissipation system and a cell heat dissipation unit.

### PRIOR ART DOCUMENTS

### PATENT DOCUMENTS

[PATENT DOCUMENT 1] Japanese Unexamined Patent Application, First Publication No. 2016-62705

### SUMMARY

### PROBLEMS TO BE SOLVED BY THE INVENTION

An objective to be accomplished by the present invention is to provide a storage battery module, a storage battery unit, and a power storage device for a vehicle in which space-saving is able to be realized.

### MEANS FOR SOLVING THE PROBLEMS

The invention is defined by the present independent claim 1.

A storage battery module according to an embodiment includes a plurality of storage batteries, a quadrangular plate-shaped member, a first partition plate, a heat-exchanger, a plurality of heat pipes, first brackets, and second brackets. The plate-shaped member has the plurality of storage batteries placed thereon and extends in a direction intersecting an attachment target surface having a fixed portion. The first partition plate stands upright to face the attachment target surface from an end portion of the plate-shaped member on the attachment target surface side and is in contact with the attachment target surface. The heat-exchanger is attached to the first partition plate and performs heat exchange. The heat pipes are disposed at positions corresponding to the plurality of storage batteries inside the plate-shaped member. The first brackets are provided to span between the plate-shaped member and the first partition plate and disposed on both sides of the attachment target surface in a planar direction in the plate-shaped member. The second brackets extend from the first partition plate in a direction in which the plate-shaped member extends and are disposed at the same position as a disposition position of each of the first brackets. Moreover, the plurality of heat pipes are drawn out from a surface on which the plurality of storage batteries in the plate-shaped member are placed and are connected to the heat-exchanger on an outer portion of the plate-shaped member. Furthermore, each of the first brackets is fixed to the plate-shaped member and the first partition plate. Each of the second brackets includes a main body wall, a first end wall, a second end wall, and at least one screw insertion tube. The main body wall is formed in a rectangular shape long in the extending direction thereof and fixed to the plate-shaped member. The first end walls are bent and extend from an end portion of the main body wall on the first partition plate side to face the first partition plate and fixed to the first partition plate. The second end walls are bent and extend from an end portion of the main body wall on a side opposite to the first partition plate to face each of the first end walls in the extending direction. The screw insertion tube extends in the extending direction to span between the first end wall and each of the second end walls and has a screw which is able to be inserted therethrough. Furthermore, through-holes which communicate with the screw insertion tubes are formed in the first partition plate, the first end wall, and the second end wall. Moreover, the screw is inserted through the through-hole of the second end wall, each of the screw insertion tubes, the through-hole of the first end wall, and the through-hole of the first partition plate in this order and fixed to the fixed portion of the attachment target surface.

### BRIEF DESCRIPTION OF THE DRAWINGS

FIG. 1 is a schematic view of a railroad vehicle having a power storage device for a vehicle installed therein in an embodiment viewed from the side.
FIG. 2 is a diagram of a storage battery module in the embodiment viewed from the top.
FIG. 3 is a diagram of the storage battery module in the embodiment viewed from the front.
FIG. 4A is a diagram of a storage battery module 100 in the embodiment viewed from the side.
FIG. 4B is a perspective view of brackets in the embodiment.
FIG. 4C is a diagram of the storage battery module in the embodiment viewed from the side.
FIG. 5 is a diagram explaining a state of assembling the storage battery unit in the embodiment.
FIG. 6 is a schematic cross-sectional view corresponding to line VI-VI of FIG. 5.
FIG. 7 is a side view showing a portion in which fans are attached to the storage battery unit in the embodiment.
FIG. 8 is a diagram explaining a state of wirings of storage batteries accommodated in the storage battery unit in the embodiment.
FIG. 9 is a diagram explaining a state of assembling the power storage device for a vehicle in the embodiment.
FIG. 10 is a schematic cross-sectional view corresponding to line X-X of FIG. 9.
FIG. 11 is a diagram of a power storage device 1 for a vehicle in the embodiment viewed from a lateral surface side on which fans and a main circuit device are provided.
FIG. 12 is a diagram illustrating an example of a filter unit in the embodiment.
FIG. 13 is a diagram illustrating an example of the plug in the embodiment.
FIG. 14 is a diagram explaining an electrical connection state when the plug in the embodiment is installed.
FIG. 15 is a diagram explaining an attachment state of a fire-extinguishing pipe when the power storage device for a vehicle in the embodiment is viewed from above.
FIG. 16 is a diagram explaining an attachment state of a fire-extinguishing pipe when the power storage device for a vehicle in the embodiment is viewed from the side.

### DETAILED DESCRIPTION

A storage battery module, a storage battery unit, and a power storage device for a vehicle will be described below with reference to the drawings. Note that, in each of the drawings illustrated below, in order to make members have recognizable sizes, the scale of the members may be appropriately modified.

A railroad vehicle 2 having a power storage device 1 for a vehicle installed therein in an embodiment will be described first with reference to the drawings.

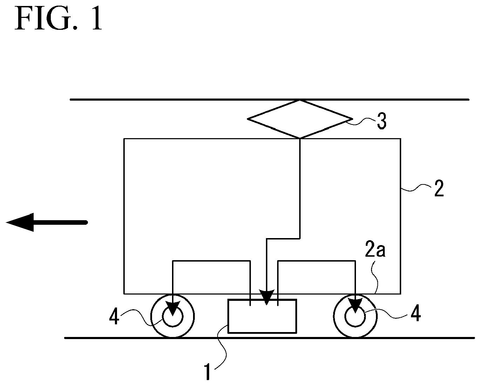

FIG. 1 is a schematic view of a railroad vehicle having a power storage device for a vehicle installed therein in the embodiment viewed from the side. The railroad vehicle 2 in this embodiment includes the power storage device 1 for a vehicle, a current collector 3, and a running motor 4. The railroad vehicle 2 is an example of a vehicle.

The power storage device 1 for the vehicle is disposed, for example, at a bottom portion 2a such as a floor in the railroad vehicle 2. The power storage device 1 for the vehicle stores electric power using overhead wire electric power supplied from the current collector 3. For example, when electric power from the current collector 3 is blocked, the power storage device 1 for the vehicle supplies the stored direct current (DC) electric power to an inverter to drive the railroad vehicle 2. The inverter converts DC electric power supplied from the power storage device 1 for the vehicle into alternating current (AC) electric power for driving an electric motor and supplies the AC electric power to the running motor 4. Thus, the power storage device 1 for the vehicle causes the running motor 4 to generate a torque and drives the railroad vehicle 2 in the arrow direction.

One or more storage battery units can be installed in the power storage device 1 for the vehicle in the embodiment. One or more storage battery modules can be installed in the storage battery unit. In the following description, the storage battery module, the storage battery unit, and the power storage device 1 for the vehicle will be described in this order.

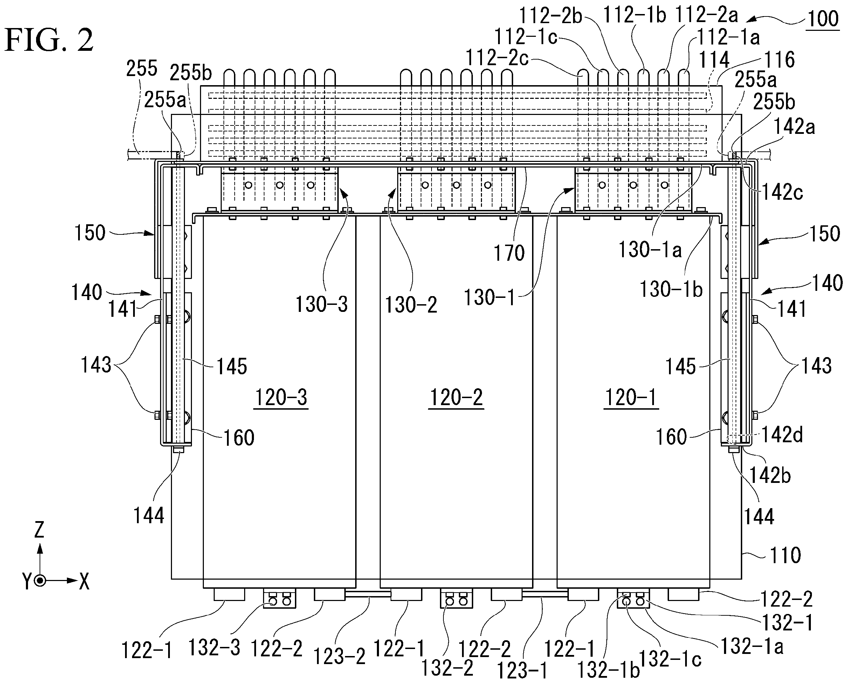

A structure of the storage battery module 100 will be described below with reference to FIGS. 2 to 4.

FIG. 2 is a diagram of the storage battery module in the embodiment viewed from the top.

The storage battery module 100 includes a plate-shaped member 110, a heat pipe 112, fins 114, a cover member 116, a plurality of storage batteries 120-1 to 120-3, and fixing members 130 and 132. It should be noted that, in the following description, explanation will be provided using an orthogonal X, Y, and Z coordinate system as necessary. In the description of FIGS. 2 to 4, an X direction coincides with a direction in which the plurality of storage batteries 120 are arranged, a Y direction coincides with a thickness direction of the plate-shaped member 110, and a Z direction coincides with a direction orthogonal to the X direction on a plane of the plate-shaped member 110.

The plate-shaped member 110 is made of a metal having a high thermal conductivity (for example, aluminum) or the like. A plurality of heat pipes 112-1 and 112-2 are provided inside the plate-shaped member 110. A plane (an XZ plane) extending in the X direction and the Z direction is formed in the plate-shaped member 11. The plate-shaped member 110 has a predetermined thickness in the Y direction.

The heat pipe 112 is formed in a hollow rod shape extending in the Z direction. A part of the heat pipe 112 is buried in the plate-shaped member 110. One end of the heat pipe 112 is drawn outside (in the Z direction) of a surface of the plate-shaped member 110 on a fin 114 side. The surface thereof on the fin 114 side may be a surface corresponding to the fin side or an upper surface (a plane) of the plate-shaped member 110. One end of each of the heat pipes 112-1 and 112-2 drawn out to the outside is installed in a state in which the one end thereof passes through one or more fins 114.

The plurality of storage batteries 120-1 to 120-3 are placed on the plane of the plate-shaped member 110. The plurality of storage batteries 120 are disposed side by side in the X direction. For example, the plurality of heat pipes 112-1a to 112-1c and the heat pipe 112-2a to 112-2c are installed in the storage batteries 120-1 and the lower plate-shaped member 110. The plurality of heat pipes 112-1 and 112-2 are arranged parallel to each other. The heat pipe 112 has a coolant such as air or water accommodated therein. The heat pipe 112 efficiently absorbs the heat of each of the storage batteries 120 from a bottom surface of each of the plurality of storage batteries 120 placed on the plate-shaped member 110 using this coolant.

Each of the fins 114 is an example of "a heat-exchanger." The fin 114 is formed in a thin plate shape extending in the X direction using the Z direction as a thickness direction. The plurality of fins 114 are laminated at intervals in the Z direction. The fins 114 extend parallel to each other in the X direction. Therefore, a flow passage through which air flows is formed between neighboring fins 114.

For example, an opening portion having a diameter smaller than a diameter of the heat pipe 112 is provided in each of the fins 114. Moreover, by press-fitting the heat pipe 112 into the opening portion, the heat pipe 112 is fixed to a predetermined position. It should be noted that the connection between the fin 114 and the heat pipe 112 is not limited to the above-described press-fitting but may be fixed using, for example, a fixing member or the like.

The storage battery module 100 includes the cover member 116 which protects the fins 114. The cover member 116 can protect the fins 114 from an external load due to unexpected contact with a worker or a shock such as a fall. Furthermore, the cover member 116 rectifies air sent from the fan provided in the storage battery unit which will be described later. The numbers of storage batteries 120 and heat pipes 112 and the like provided in the storage battery module 100 are not limited by this.

According to such a constitution, when the heat generated in the storage batteries 120-1 to 120-3 is transmitted to the plate-shaped member 110, a coolant in the heat pipe 112 provided inside the plate-shaped member 110 is heated by this heat. The heated coolant flows to an end portion in the heat pipe 112 in the Z direction by convection. Moreover, the coolant exchanges heat with ambient air at the end portion in the heat pipe 112 in the Z direction via the heat pipe 112 and the fins 114. Thus, it is possible to radiate heat generated in the storage batteries 120 via the coolant, the heat pipe 112 and the fins 114.

A connecting connector 122 is provided on one surface of each of the storage batteries 120 placed on the plate-shaped member 110. In the storage battery module 100, the surface on which the connecting connector 122 is provided is a surface which faces, for example, a surface on which the fins 114 are provided. The connecting connector 122 connects a cable 123 for electrically connecting to another storage battery 120. The connecting connector 122 includes negative connecting connectors 122-1 and positive connecting connectors 122-2. When the storage batteries 120 are connected to each other, one negative connecting connector 122-1 is connected to a positive connecting connector 122-2 in another storage battery 120.

Also, the storage battery module 100 includes fixing members 130-1 to 130-3 and 132-1 to 132-3 for fixing the plurality of storage batteries 120-1 to 120-3 to the plate-shaped member 110. The fixing member 130-1 which fixes the storage battery 120-1 connects a first partition plate 130-1a to a second partition plate 130-1b.

The first partition plate 130-1a is formed in a plate shape having an XY plane. The first partition plate 130-1a has a predetermined thickness in the Z direction. The first partition plate 130-1a extends to a position corresponding to a length of the plate-shaped member 110 in the X direction. The first partition plate 130-1a includes opening portions which are provided at positions corresponding to the storage batteries 120-1 to 120-3 and through which the heat pipe 112 drawn from the plate-shaped member 110 passes in a non-contact manner. The first partition plate 130-1a is provided between the storage battery 120-1 and the fin 114. Furthermore, a first partition plate 131-1a is connected to an end portion of the plate-shaped member 110 on the fin 114 side in such a manner as to stand upright in a direction orthogonal to a direction in which the plate-shaped member 110 extends. In addition, a surface of the first partition plate 131-1a on the fin 114 side is connected to the cover member 116.

The second partition plate 130-1b is provided at a position between the storage battery 120-1 and the fin 114 closer to the storage battery 120 than the first partition plate 130-1a. Furthermore, the second partition plate 130-1b is connected to the storage battery 120. The second partition plate 130-1b is formed in a plate shape having the XY plane. The second partition plate 130-1b has a predetermined thickness in the Z direction. The second partition plate 130-1b extends to a position corresponding to a length of each of the storage batteries 120-1 to 120-3 in the X direction. In addition, each of the second partition plates 130-1b extends to a position in which a gap between the second partition plate 130-1b and the second partition plate 130-1b which corresponds to another adjacent storage battery 120 is small or a position in which there is no gap. Furthermore, a right end portion of the second partition plate 130-1b with respect to the storage battery 120-1 disposed on the rightmost side in the X direction of the plate-shaped member 110 extends to the end portion of the plate-shaped member 110 in the X direction. Moreover, a left end portion of the second partition plate 130-1b corresponding to the storage battery 120-3 disposed on the leftmost side in the X direction of the plate-shaped member extends to the end portion of the X direction of the plate-shaped member 110. The first partition plate 130-1a and the second partition plate 130-1b are formed of, for example, iron plates.

The fixing member 132-1 which fixes the storage battery 120-1 includes an L-shaped attaching member 132-1a. One end of the attaching member 132-1a is screwed to a surface on which the connecting connector 122 of the storage battery 120 is provided using four screws 132-1b. The other end of the attaching member 132-1a is screwed to an upper surface of the plate-shaped member 110 using two screws 132-1c. Similarly, the other storage batteries 120-2 and 120-3 placed on the plate-shaped member 110 are fixed using the fixing members 130-2 and 130-3 and the fixing members 132-2 and 132-3. It should be noted that the number of screws is not limited to these. Thus, the storage batteries 120-1 to 120-3 are fixed to the plate-shaped member 110 at two portions in the Z direction.

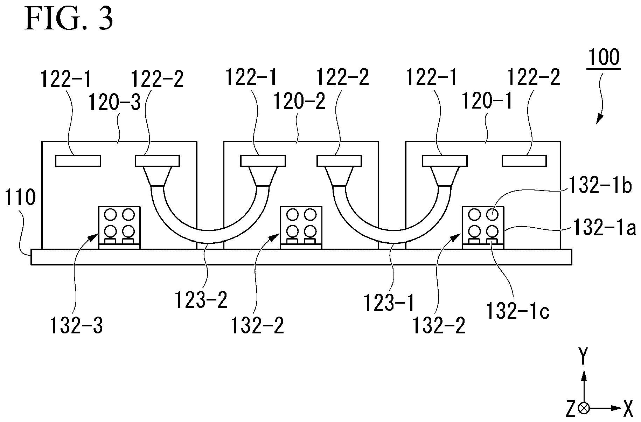

FIG. 3 is a diagram of the storage battery module in the embodiment viewed from the front.

The plurality of storage batteries 120-1 to 120-3 placed on the plate-shaped member 110 are arranged so that a surface on which the connecting connector 122 is provided is disposed at a position which can be seen from the front surface of the storage battery module 100. For example, the surface on which the connecting connector 122 is provided is disposed to face in the same direction (a -Z direction). Thus, the worker can quickly perform connecting work on the cable 123 between the storage batteries 120-1 to 120-3 facing in the same direction.

The plurality of storage batteries 120-1 to 120-3 placed on the plate-shaped member 110 are arranged so that positions of the negative connecting connectors 122-1 are located close to the positive connecting connectors 122-2 of another storage battery 120. Thus, it is possible to shorten a length of a cable 123-1 which connects the connecting connector 122-1 in the storage battery 120-1 to the connecting connector 122-2 in the storage battery 120-2. Furthermore, it is possible to shorten a length of a cable 123-2 which connects the connecting connector 122-1 in the storage battery 120-2 to the connecting connector 122-2 in the storage battery 120-3. Furthermore, it is possible to prevent errors or the like when the operator performs connection.

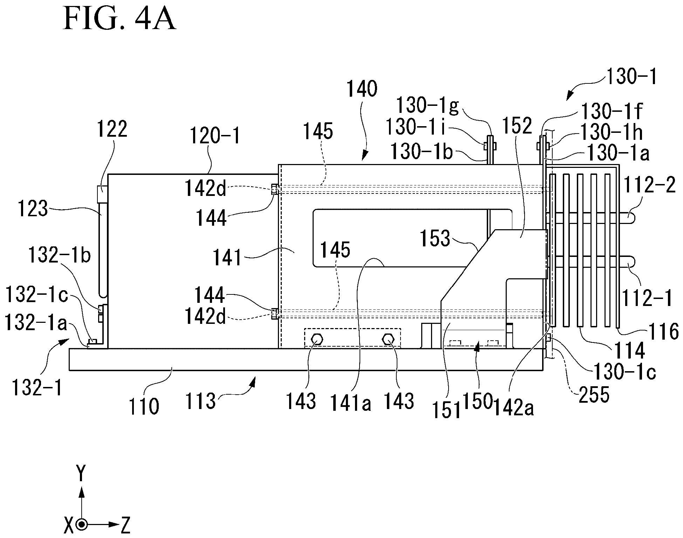

FIG. 4A is a diagram of the storage battery module 100 in the embodiment viewed from the side.

Brackets 140 and auxiliary brackets 150 are attached to both ends of the plate-shaped member 110 and the first partition plate 130-1a in the X direction.

Each of the brackets 140 is for preventing the first partition plate 130-1a from falling down and securing contact pressure between the first partition plate 130-1a and a wall plate 255 which will be described later. It should be noted that this contact pressure will be described in detail later.

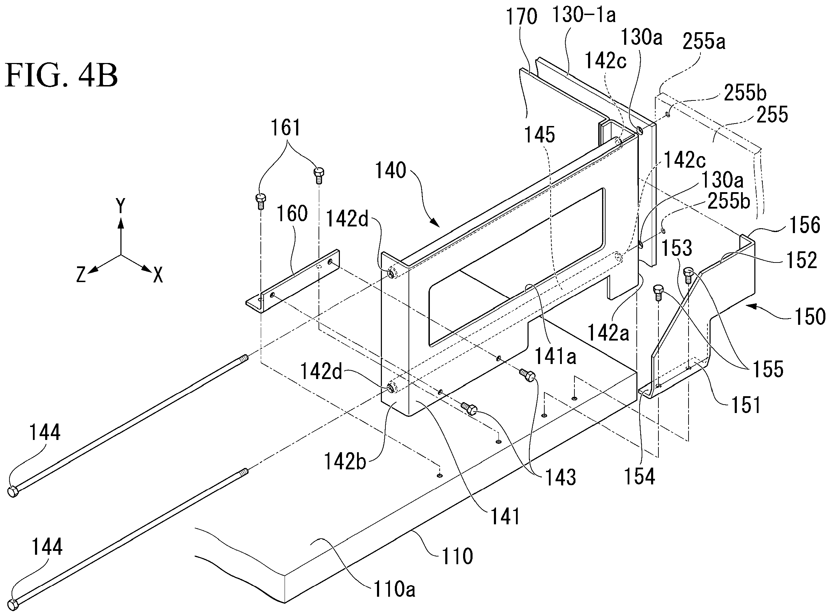

FIG. 4B is an exploded perspective view of the brackets 140 and the auxiliary brackets 150 in the embodiment.

The bracket 140 is obtained by integrally forming a plate-shaped main body wall 141 which is formed in a substantially rectangular shape which is long in the Z direction when viewed from the X direction and a first end wall 142a and a second end wall 142b which are bent from both ends of the main body wall 141 in the Z direction toward the storage batteries 120-1 to 120-3 and have a thickness in the Z direction.

An end portion of the main body wall 141 on the plate-shaped member 110 side and the plate-shaped member 110 overlap in the X direction. Moreover, the main body wall 141 and the plate-shaped member 110 are connected via an attaching bracket 160 having an L-shaped cross section.

The main body wall 141 and the attaching bracket 160 are screwed using screws 143. Furthermore, the plate-shaped member 110 and the attaching bracket 160 are screwed using screws 161.

Also, an opening portion 141a is formed in a large portion of a center of the main body wall 141 when viewed from the X direction. The opening portion 141a is for reducing a size of the bracket 140.

The first end wall 142a is disposed at a side end of the first partition plate 130-1a in the main body wall 141 and is in contact with the first partition plate 130-1a. Moreover, the first end wall 142a is fixed to the first partition plate 130-1a, for example, using welding or the like.

It should be noted that a bent portion obtained by bending an end portion of the first partition plate 130-1a in the X direction may be defined as the main body wall 141 and a portion of the first partition plate 130-1a in the X direction may be defined as the first end wall 142a.

The second end wall 142b is disposed at an end of the main body wall 141 opposite to the first partition plate 130-1a.

Also, two screw insertion tubes 145 are provided in a surface of the main body wall 141 on the storage batteries 120-1 to 120-3 side (a surface on a side at which the end walls 142a and 142b are bent and extend) to span between end walls 142a and 142b. The two screw insertion tubes 145 extend in the Z direction that is the same as a direction in which the plate-shaped member 110 extends and are disposed on both sides of the main body wall 141 in the Y direction. Moreover, both ends of each of the screw insertion tubes 145 in a longitudinal direction are fixed to the end walls 142a and 142b, for example, using welding or the like.

The screw insertion tubes 145 are tubes through which screws 144 pass. Through-holes 142c and 142d which communicate with the screw insertion tubes 145 are formed in portions of the end walls 142a and 142b corresponding to the screw insertion tubes 145. In addition, the screw insertion tubes 145 and the through-holes 130a which communicate with the through-holes 142c and 142d are formed in the first partition plate 130-1a. With such a constitution, when the screws 144 are inserted into the screw insertion tubes 145 from the second end wall 142b side via the through-holes 142d, distal ends of the screws 144 protrude via the through-holes 130a of the first partition plate 130-1a. The protruding distal ends of the screws 144 are screwed into the wall plate 255 which will be described later.

It should be noted that a case in which the bracket 140 is constituted of the main body wall 141 and the end walls 142a and 142b has been described. However, the present invention is not limited thereto and the bracket 140 may be provided to span between the plate-shaped member 110 and the first partition plate 130-1a. Furthermore, the screw insertion tube 145 may not be provided in the bracket 140. Instead of this screw insertion tube 145, an insertion hole through which each of the screws 144 can be inserted and a distal end of each of the screws 144 protrudes from the first partition plate 130-1a may be provided in the bracket 140.

In the bracket 140 constituted in this way, two brackets 140 disposed at both ends of the plate-shaped member 110 and the first partition plate 130-1a in the X direction are joined via a connection plate 170.

The connection plate 170 is a plate-shaped member which is long in the X direction. Moreover, the connection plate 170 is disposed at an end portion of the first end wall 142a of two brackets 140 opposite to the plate-shaped member 110. Furthermore, joint portions 171 bent and extending to a side opposite to the first partition plate 130-1a in the Z direction are integrally formed at both ends of the connection plate 170 in the X direction. The joint portions 171 and the first end wall 142a of the two brackets 140 are fixed, for example, using welding or the like. Moreover, the connection plate 170 is in contact with the first partition plate 130-1a.

Each of the auxiliary brackets 150 is for preventing the first partition plate 130-1a from falling down and is disposed at a position in which the auxiliary bracket 150 and the bracket 140 overlap in the X direction. The auxiliary bracket 150 is formed in a substantially L-shape when viewed from the X direction to span between the first partition plate 130-1a and the plate-shaped member 110. That is to say, the auxiliary bracket 150 is obtained by forming a continuous vertical bracket 151 which extends from the plate-shaped member 110 in the Y direction and a horizontal bracket 152 which extends from an end of the vertical bracket 151 opposite to the plate-shaped member 110 to the first partition plate 130-1a in the Z direction. A flattened portion 153 is formed at a joint portion between the vertical bracket 151 and the horizontal bracket 152.

Also, an attachment seat 154 bent and extending to face one surface 110a of the plate-shaped member 110 is integrally formed on an end portion of the vertical bracket 151 on the plate-shaped member 110 side. The attachment seat 154 and the one surface 110a of the plate-shaped member 110 are screwed using screws 155.

In addition, the attachment seat 156 is integrally formed on an end portion of the horizontal bracket 152 on the first partition plate 130-1a side. The attachment seat 156 is bent and extends to go around a surface of the first partition plate 130-1a opposite to a side on which the bracket 140 is disposed. The attachment seat 156 and the first partition plate 130-1a are fixed, for example, using welding or the like.

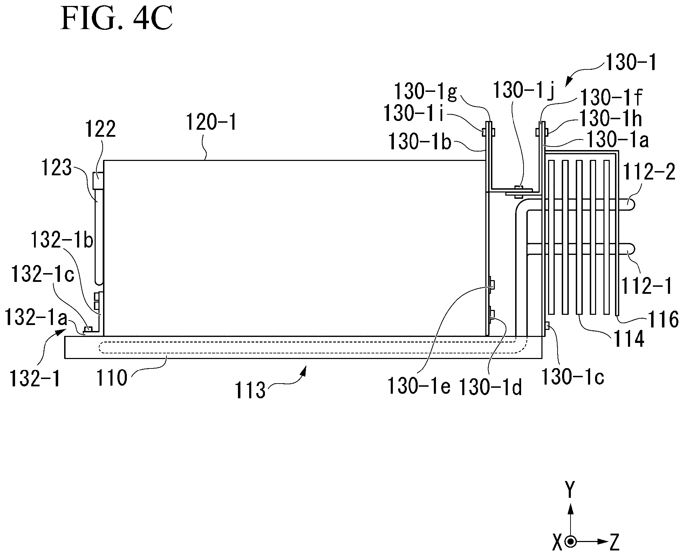

FIG. 4C is a diagram of the storage battery module 100 in the embodiment viewed from the side in a state in which the bracket 140 is removed.

The heat pipe 112-1 and the heat pipe 112-2 extend in the Z direction in parallel with an XZ plane of the plate-shaped member 110 inside the plate-shaped member 110 and then are bent at an angle which is not parallel to the XZ plane between the position of the storage battery 120 and the position of the fin 114, and are drawn from the XZ plane on which the storage battery 120 is placed. For example, the bent heat pipe 112-1 and heat pipe 112-2 are drawn out in a +Y direction perpendicular to the XZ plane. The drawn out heat pipe 112-1 and heat pipe 112-2 extend to a predetermined position while being displaced in the +Y direction. The heat pipe 112-1 and the heat pipe 112-2 each extend to different heights in the +Y direction, are bent in a direction (a +Z direction) in which the fins 114 are provided, and are connected to the fins 114. The heat pipe 112-1 and the heat pipe 112-2 are connected thereto such that they perpendicularly intersect the XY plane of the fins 114.

The first partition plate 130-1a is provided at a position close to the fins 114 and the second partition plate 130-1b is provided at a position close to the storage battery 120. Due to the plurality of heat pipes 112-1 and 112-2 being bent in the space between the first partition plate 130-1a and the second partition plate 130-1b, it is possible to vary the height of the position where the plurality of heat pipes 112-1 and 112-2 are connected to the fins 114.

In this way, since the heat pipe 112-1 and the heat pipe 112-2 are bent at different heights and the heat pipe 112-1 and the heat pipe 112-2 are connected to the fins 114, it is possible to dispose installation portions of the heat pipe 112-1 and the heat pipe 112-2 and the fin 114 apart from each other by a predetermined distance or more.

Therefore, the positions at which heat exchange with the heat pipe 112-1 and the heat pipe 112-2 is performed can be dispersed across the fins 114. Thus, it is possible to efficiently perform heat exchange between the heat pipe 112-1 and the heat pipe 112-2 and the fin 114.

The storage battery module 100 utilizes the space displaced in the +Y direction until the heat pipe 112-1 and the heat pipe 112-2 drawn from the plate-shaped member 110 reach the fins 114 and the first partition plate 130-1a is joined to the second partition plate 130-1b using the above fixing member 130-1.

The above first partition plate 130-1a partitions a space in which the heat pipe 112-1 and the heat pipe 112-2 are displaced in the +Y direction and a space in which the fins 114 are provided. Furthermore, the second partition plate 130-1b partitions a space in which the heat pipe 112-1 and the heat pipe 112-2 are displaced in the +Y direction and a space in which the storage battery 120-1 is provided.

The first partition plate 130-1a is screwed to one surface of the plate-shaped member 110 (a surface facing in the +Z direction) using screws 130-1c. This surface is a surface at a position in the +Z direction relative to a position in which the heat pipe 112-1 and the heat pipe 112-2 in the plate-shaped member 110 are bent and are drawn from the XZ plane of the plate-shaped member 110. Furthermore, the second partition plate 130-1b is screwed to a surface of the storage battery 120 in the +Z direction using two screws 130-1d and 130-1e. This surface is at a position in which the heat pipe 112-1 and the heat pipe 112-2 in the plate-shaped member 110 are bent and which is in a -Z direction relative to a position drawn from the XZ plane of the plate-shaped member 110. The first partition plate 130-1a and the second partition plate 130-1b have a predetermined thickness in the Z direction. Furthermore, the first partition plate 130-1a and the second partition plate 130-1b form a plane (the XY plane) in the X direction and the Y direction.

The fixing member 130-1 includes two fixing frames 130-1f and 130-1g having an L-shaped plate shape. One end of a fixing frame 130-1f is positioned so that the one end of the fixing frame 130-1f and the first partition plate 130-1a overlap and is screwed using screws 130-1h. Furthermore, the one end of the fixing frame 130-1g is positioned so that the one end of the fixing frame 130-1g and the second partition plate 130-1b overlap and is screwed using screws 130-1i. Moreover, the other end of the fixing frame 130-1f and the other end of the fixing frame 130-1g overlap at a position parallel to an XZ plane and the other ends are screwed using screws 130-1j. Therefore, the first partition plate 130-1a and the second partition plate 130-1b are fixed to each other.

In this way, the heat pipe 112-1 and the heat pipe 112-2 are bent in a space sandwiched by an XY plane of the first partition plate 130-1a and an XY plane of the second partition plate 130-1b and are displaced in the +Y direction. Furthermore, a space in which the heat pipe 112-1 and the heat pipe 112-2 are bent and a space above a space to be displaced in the +Y direction are used. In this way, it is possible to fix the storage battery 120-1 in a state such that the storage battery 120-1 is placed on the plate-shaped member 110 using the fixing members 130-1. Therefore, it is possible to achieve space-saving of the storage battery module 100.

A surface of the storage battery 120-1 opposite to a surface to which the storage battery 120 is fixed using the fixing members 130-1 is fixed using the fixing members 132-1. Since the storage battery 120 is fixed at two positions in front and behind in the Z direction using the fixing members 130 and 132, it is possible to stably fix the storage battery 120. Furthermore, since the plurality of storage batteries 120 are placed on one plate-shaped member 110, when a large storage capacity is required, the plurality of storage batteries 120 can be collectively incorporated into a module. Thus, it is possible to reduce the entire accommodation space.

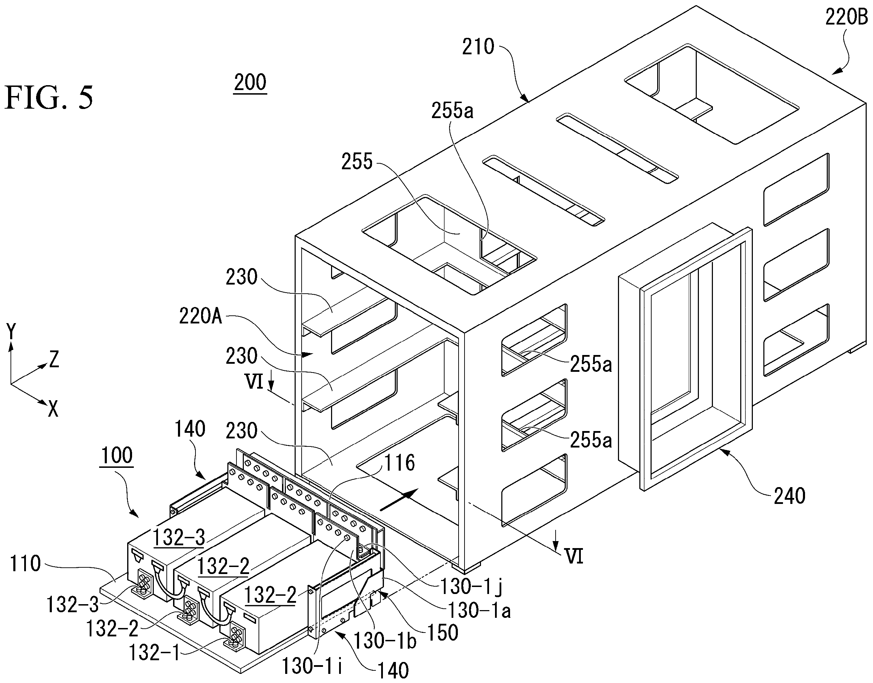

Based on FIGS. 5 to 8, a storage battery unit 200 which includes the storage battery module 100 will be described below with reference to the drawings. It should be noted that, in the description of FIGS. 5 to 8, the X direction coincides with a horizontal direction of a casing 210, the Y direction coincides with a vertical direction of the casing 210, and the Z direction coincides with a direction orthogonal to the XY plane.

FIG. 5 is a diagram explaining a state of assembling the storage battery unit in the embodiment.

The casing 210 in the storage battery unit 200 includes an opening portion 220, a shelf plate 230, and an accommodation portion 240.

The casing 210 is made of iron or the like. The casing 210 is formed in a rectangular parallelepiped shape which is long in the Z direction. The casing 210 has an opening portion 220A into which the storage battery module 100 is inserted on one surface forming the XY plane. Furthermore, the casing 210 has an opening portion 220B in which the storage battery module is also inserted into a surface thereof facing the surface on which the opening portion 220A is provided. In addition, in the casing 210, one of surfaces (a YZ plane) formed between two opening portions 220A and 220B has the accommodation portion 240 which accommodates fans 250. A shape of the accommodation portion 240 is a quadrangular shape and the accommodation portion 240 opens so that the fans 250 are inserted.

The shelf plate 230 is provided inside the casing 210 so that the storage battery module 100 is disposed at a predetermined position. The shelf plate 230 is formed to extend in a direction (the +Z direction) in which the storage battery module 100 is inserted from the opening portion 220A and in a direction (the -Z direction) in which the storage battery module 100 is inserted from the opening portion 220B. The shelf plate 230 is provided at a position in which the shelf plate 230 is in contact with the bottom portion of the storage battery module 100. The shelf plate 230 is fixed to an inner surface of the casing 210. The shelf plate 230 is installed in accordance with the number of storage battery modules 100 inserted from one opening portion 220.

In the storage battery unit 200, three storage battery modules 100 are disposed to be arranged in three stages in the +Y direction from the opening portion 220A. When accommodating the storage battery module 100 in the casing 210, the worker places each storage battery module 100 on the shelf plate 230 provided in correspondence with each stage and inserts the storage battery module 100 into the casing 210 in the Z direction while moving the storage battery module 100 onto the shelf plate 230. Thus, it is possible to easily accommodate the storage battery module 100.

A receiving portion of the shelf plate 230 (a contact surface with the bottom surface of the storage battery module 100) is made of, for example, stainless steel. By using stainless steel, it is possible to easily slide the storage battery module 100 on the shelf plate 230. By using stainless steel, it is not necessary to perform coating such as plating on the receiving portion of the shelf plate 230 and it is possible to form the receiving portion at lower costs than using a metal such as titanium.

A plurality of surfaces which have the fins 114 of each storage battery module 100 accommodated in the casing 210 are disposed in a space in which the accommodation portion 240 is present in a state in which the surfaces face in one direction. It should be noted that the number of storage battery modules 100 to be disposed is not limited to this. For example, only one of the opening portion 220A and the opening portion 220B may be provided in the casing 210 of the storage battery unit 200. In this case, three storage battery modules 100 are disposed in one direction from the provided opening portion. Furthermore, in the storage battery unit 200, the storage battery module 100 may be arranged in a horizontal direction instead of being arranged in a vertical direction.

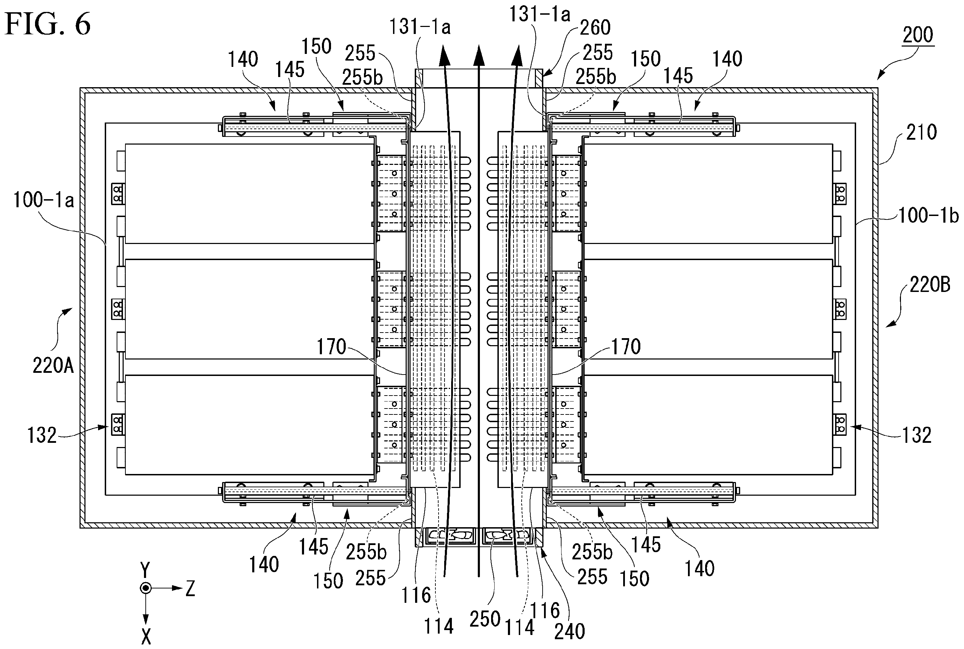

FIG. 6 is a schematic cross-sectional view corresponding to line VI-VI of FIG. 5. The example of FIG. 6 illustrates a state in which each storage battery module 100 is accommodated in the casing 210.

Three storage battery modules 100 are disposed in the storage battery unit 200 from the opening portion 220A and the opening portion 220B.

Storage batteries 120-1a to 120-3a are arranged in a storage battery module 100-1a disposed on the lowermost surface among storage battery modules 100 inserted from the opening portion 220A. Storage batteries 120-1b to 120-3b are arranged in a storage battery module 100-1b disposed on the lowermost surface among storage battery modules 100 inserted from the opening portion 220B. At that time, a surface on which the fins 114 of each of the storage battery modules 100 are provided is accommodated in the casing 210 to be able to receive air sent through each of the fans 250 installed in the accommodation portion 240.

Also, the wall plate 255 for isolating the storage battery 120 of the inserted storage battery module 100 from the fins 114 is provided in the casing 210. An opening portion 255a through which the fins 114 and the cover member 116 are inserted is formed in the wall plate 255.

In the storage battery module 100 inserted into the casing 210, the fins 114 and the cover member 116 pass through the opening portion 255a in the wall plate 255 and the periphery of the opening portion 255a in the wall plate 255 and the first partition plate 130-1a in the storage battery module 100 are brought into contact with each other.

Here, in the wall plate 255, a female screw portion 255b (illustrated in detail in FIGS. 2 and 4B) is provided at a position corresponding to the through-holes 130a formed in the first partition plate 130-1a. Moreover, a distal end of each of the screws 144 inserted from each of the through-holes 142d of the second end wall 142b in the bracket 140 (refer to FIGS. 4A and 4B) provided in the storage battery module 100 passes through the screw insertion tube 145, sequentially passes through each of the through-holes 142c in the first end wall 142a and each of the through-holes 130a in the first partition plate 130-1a, and is screwed to the female screw portion 255b in the wall plate 255. Thus, the first partition plate 130-1a is fastened and fixed to the wall plate 255.

When the first partition plate 130-1a and the wall plate 255 are in contact with each other, an accommodation position of the storage battery module 100 is fixed. Furthermore, when the first partition plate 130-1a and the wall plate 255 are in contact with each other, a space in which the fins 114 in the casing 210 are provided and a space in which the storage battery 120 is provided are isolated from each other. A seal member such as a packing is provided at a contact portion between the first partition plate 130-1a and the wall plate 255.

Here, the first partition plate 130-1a is fastened and fixed to the wall plate 255 using the screws 144. The screw insertion tube 145 into which the screws 144 are inserted extends in the Z direction that is the same as the direction in which the plate-shaped member 110 extends. That is to say, the screw insertion tube 145 extends in a direction orthogonal to that of the first partition plate 130-1a. For this reason, when the screws 144 are tightened, a seal member such as a packing is pressed by an axial force of these screws 144 so that the first partition plate 130-1a is slightly compressed and deformed. Furthermore, the main body wall 141 of the bracket 140 is formed in a substantially rectangular shape which is long in the Z direction orthogonal to the first partition plate 130-1a. For this reason, the axial force of each of the screws 144 is reliably and effectively transmitted to the first partition plate 130-1a via the bracket 140. As a result, contact pressure between the seal member and the wall plate 255 and contact pressure between the seal member and the first partition plate 130-1a are maintained at an appropriate pressure. Thus, it is possible to reliably seal between the wall plate 255 and the first partition plate 130-1a.

In addition, the bracket 140 is constituted of the first end wall 142a and the second end wall 142b which are bent from both ends of the main body wall 141 in the Z direction toward the storage batteries 120-1 to 120-3 and have a thickness in the Z direction. Moreover, since two screw insertion tubes 145 are provided to span between the end walls 142a and 142b, the axial force of the screws 144 exerted to the end walls 142a and 142b and the screw insertion tube 145 can be effectively transmitted to the first partition plate 130-1a.

Also, since the main body wall 141 and the plate-shaped member 110 are joined to each other via the attaching bracket 160, the bracket 140 can reliably press the first partition plate 130-1a against the wall plate 255 and it is possible to reliably prevent the first partition plate 130-1a from falling down.

Furthermore, in a case in which the main body wall 141 and the plate-shaped member 110 are directly fastened and fixed, if a gap is generated between the main body wall 141 and the plate-shaped member 110, when the main body wall 141 and the plate-shaped member 110 are screwed using the screws 143, the main body wall 141 is likely to deform. However, by fixing the main body wall 141 and the plate-shaped member 110 via the attaching bracket 160, deformation of the main body wall 141 can be reliably prevented.

Also, since the auxiliary bracket 150 is provided to span between the first partition plate 130-1a and the plate-shaped member 110, it is also possible to prevent the first partition plate 130-1a from falling down. Moreover, the auxiliary bracket 150 is disposed at a position in which the auxiliary bracket 150 and the bracket 140 overlap in the X direction. As a result, when the screws 144 are tightened to serve to assist the mechanical strength of the bracket 140, the first partition plate 130-1a can be reliably pressed toward the wall plate 255. Thus, it is possible to reliably seal between the wall plate 255 and the first partition plate 130-1a and it is possible to firmly fix the first partition plate 130-1a (the storage battery module 100) to the wall plate 255.

In addition, two brackets 140 disposed on both ends of the plate-shaped member 110 and the first partition plate 130-1a in the X direction are joined via the connection plate 170. Moreover, the connection plate 170 is in contact with the first partition plate 130-1a. For this reason, together with the bracket 140, the connection plate 170 can press the first partition plate 130-1a and presses the entire first partition plate 130-1a against the wall plate 255. Thus, it is possible to more reliably maintain contact pressure between the seal member and the wall plate 255 and contact pressure between the seal member and the first partition plate 130-1a at appropriate pressures.

In this way, when the storage battery module 100 is inserted into the casing 210 and the first partition plate 130-1a is in contact with the seal member, a space in which the fins 114 are arranged is isolated from a space in which the storage battery 120 is arranged in the casing 210 by the first partition plate 130-1a and the wall plate 255. For this reason, it is possible to prevent a fluid such as water, air, dust, and the like in the space in which the fins 114 are provided from entering the space in which the storage battery 120 is provided. Furthermore, it is possible to enhance the airtightness of a space in which the fins 114 are accommodated.

The fans 250 installed in the accommodation portion 240 send air suctioned from the outside together to the fins 114 of each of the storage battery modules 100. Furthermore, the fans 250 exhaust the suctioned air from an exhaust port 260 provided at a position of the casing 210 opposite to the accommodation portion 240 through a space inside the casing 210 in which the fins 114 are disposed in the storage battery module 100. The cover member 116 provided in the storage battery module 100 rectifies air sent from the fans 250 and efficiently exhausts the air from the exhaust port 260.

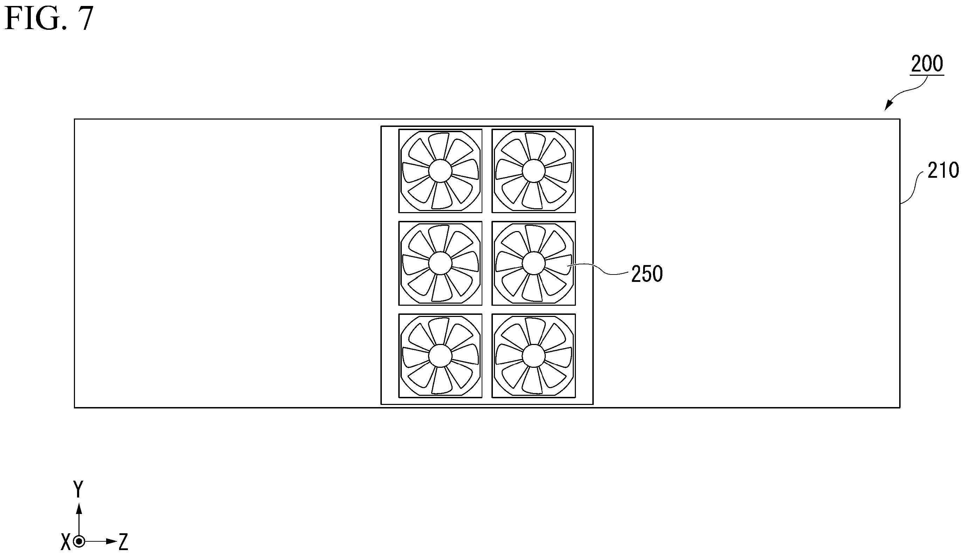

FIG. 7 is a side view showing a portion in which fans are attached to the storage battery unit in the embodiment.

The fans 250 are disposed in accordance with the number of stages of the storage battery module 100 inserted from the opening portion 220A and 220B. The number of fans 250 may not be associated with the number of stages of the storage battery module 100.

Each of the fans 250 has a wing-shaped rotating body formed therein and suctions outside air using the rotation of the rotating body. It is possible to adjust an amount and strength of air sent to the fins 114 using a rotation speed or the like of the rotating body. The fans 250 send outside air suctioned into the casing 210 to a space in which the fins 114 in the storage battery module 100 are isolated. The sent air absorbs the heat of the fins 114 and is exhausted through the exhaust port 260. In this way, the storage battery unit 200 can efficiently perform heat exchange by accommodating a plurality of portions of each storage battery module 100 in which the fins 114 are provided in a state in which the storage battery unit 200 receives air by the fans 250.

Also, since the space in which the fins 114 are accommodated is highly air-tight in the storage battery unit 200, the flow of air by the fans 250 is improved. For this reason, it is possible to perform efficient heat exchange and it is easy to ensure quality. By collecting the portions in which the fins 114 of each storage battery module 100 are provided, it is unnecessary to install many partition walls for securing airtightness. Thus, it is possible to achieve space-saving of the storage battery unit 200. Furthermore, even when an amount of heat of the storage battery 120 increases along with an increase in capacity or output of the storage battery 120, it is possible to improve the performance of heat exchange.

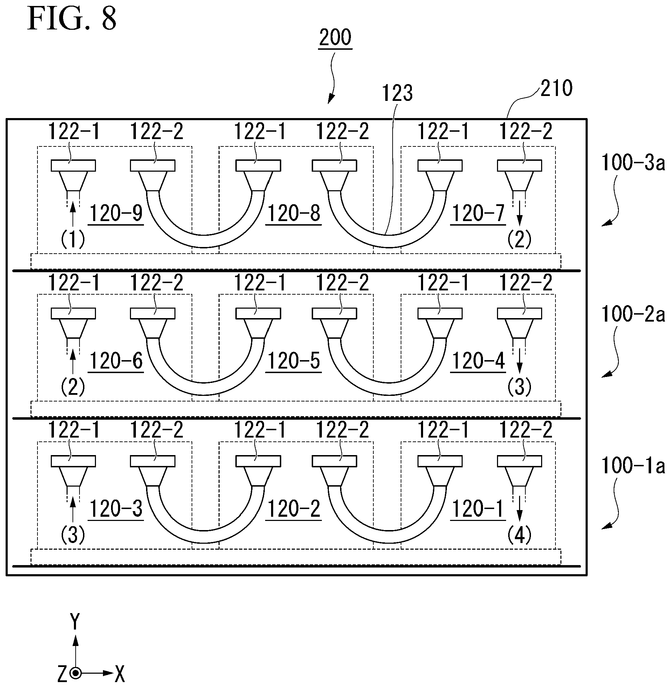

FIG. 8 is a diagram explaining a state of wirings of storage batteries accommodated in the storage battery unit in the embodiment.

For example, when three storage battery modules 100 are vertically arranged from the opening portion 220A, a total of nine storage batteries 120-1 to 120-9 are arranged together with the storage battery modules 100-1a to 100-3a of each layer in the +Y direction. Furthermore, a total of nine storage batteries 120 are also arranged in the three storage battery modules 100 accommodated in the opening portion 220B. In the storage battery unit 200, the 18 storage batteries 120 are connected in series using the cable 123.

For example, the connection of the storage battery 120-9 on the leftmost side among the storage battery modules 100-3a arranged in a third layer at the uppermost position will be described. The negative connecting connector 122-1 in the storage battery 120-9 is connected to the storage battery module 100 inserted from the opening portion 220B of the storage battery unit 200 on the opposite side of the opening portion 220A. To be more specific, the negative connecting connector 122-1 in the storage battery 120-9 is connected to the storage battery module 100 of a first layer at the lowest position of the three storage battery modules 100. In addition, a cable from the positive connecting connector 122-2 of a storage battery on the rightmost side of the storage battery module 100 is connected to the negative connecting connector 122-1 of the storage battery 120-9.

Also, a cable connected to the positive connecting connector 122-2 of the storage battery 120-7 on the rightmost side of a third layer is connected to the negative connecting connector 122-1 of the storage battery 120-6 on the leftmost side of the storage battery module 100-2a disposed in a second layer.

The connection of the storage battery 120-4 on the rightmost side among the storage battery modules 100-2a disposed in the second layer will be described below. A cable connected to the positive connecting connector 122-2 of the storage battery 120-4 is connected to the storage battery module 100-1a disposed in the first layer. To be more specific, the cable connected to the positive connecting connector 122-2 is connected to a negative connection cable 12201 of the storage battery 120-3 on the leftmost side of the storage battery module 100-1a.

Also, the cable connected to the positive connecting connector 122-2 of the storage battery 120-1 on the rightmost of the storage battery module 100-1a disposed in the first layer is connected to a positive connecting connector of a main circuit device or a control circuit device which will be described later. Furthermore, the cable connected to the positive connecting connector of the main circuit device or the control circuit device is connected to the negative connecting connector 122-1 of the storage battery on the leftmost side of the third layer at the uppermost position of the three storage battery modules 100 inserted from the opening portion 220B. The three storage battery modules 100 inserted from the opening portion 220B are also connected between the layers in the same manner as described above. Furthermore, the storage batteries 120-2, 120-5, and 120-8 at a center of the storage battery modules 100-1a, 100-2a, and 100-3a are connected to connecting connectors with opposite polarities of the storage battery 120 on both sides thereof.

With such a connection state, it is possible to electrically serially connect all of the 18 storage batteries 120 accommodated in the storage battery unit 200. Furthermore, by connecting the storage batteries 120-1 to 120-3, the storage batteries 120-4 to 120-6, and the storage batteries 120-7 to 120-9 in advance before accommodating them in the storage battery unit 200, it is possible to efficiently perform wiring connection work. In addition, for the connection between the storage batteries 120, a cable according to a distance between connectors is installed in the casing 210 in advance. This is for the purpose of preventing misconnection of the cables. Thus, after the storage battery module 100 is assembled at a predetermined position of the storage battery unit 200, it is possible to reliably connect wirings using the installed cables.

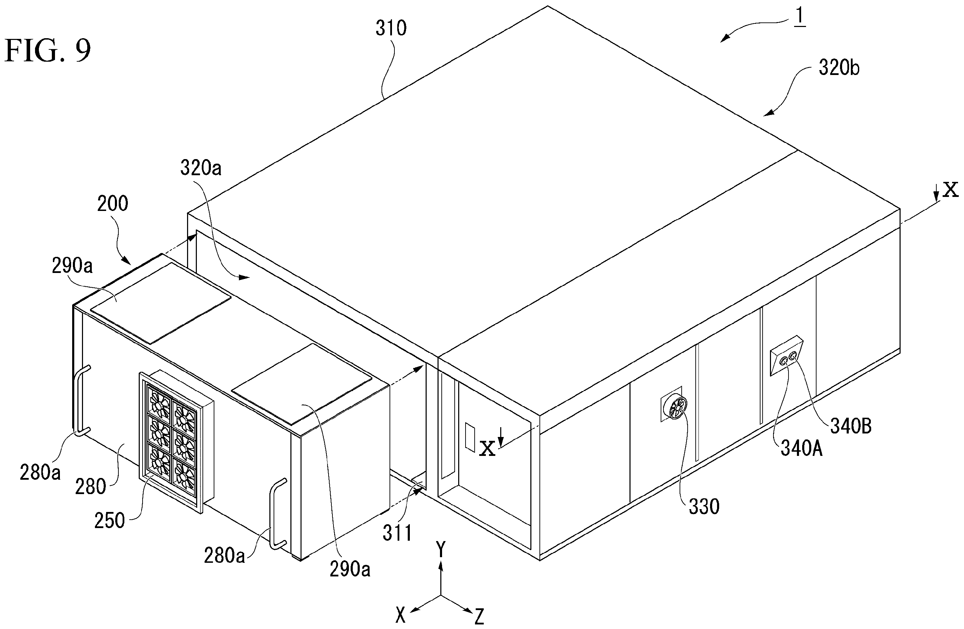

The power storage device 1 of the vehicle will be described below with reference to FIGS. 9 to 16. It should be noted that, in the explanation of FIGS. 9 to FIG. 16, the X direction coincides with the horizontal direction of the casing 310, the Y direction coincides with the vertical direction of the casing 310, and coincides with the direction orthogonal to the XY plane.

FIG. 9 is a diagram explaining a state of assembling the power storage device 1 for the vehicle in the embodiment.

The casing 310 of the power storage device 1 for the vehicle is formed, for example, in a rectangular parallelepiped shape having substantially the same length in the X direction and the Z direction. The casing 310 is made of, for example, iron or the like. In the casing 310, an insertion port 320a through which the storage battery module is inserted is formed in one surface (the YZ plane). Furthermore, an insertion port 320b through which another storage battery unit 200 is inserted is formed in a surface of the casing 310 opposite to the portion in which the insertion port 320a is provided.

The shelf plate 311 is provided inside the casing 310 so that the storage battery unit 200 is disposed at a predetermined position. It should be noted that, instead of the shelf plate 311, a positioning guide may be provided. A receiving portion of the shelf plate 311 (a contact surface between the shelf plate 311 and a bottom surface of the storage battery unit 200) is made of, for example, stainless steel. By using stainless steel, it is possible to easily slide the storage battery unit 200 in a depth direction while the storage battery unit 200 is placed on the shelf plate 311. By using stainless steel, it is not necessary to perform coating such as plating on the receiving portion of the shelf plate 311 and it is possible to form the receiving portion at lower costs than using a metal such as titanium.

The storage battery unit 200 is inserted from the insertion ports 320a and 320b in the casing 310 in a state in which a surface having the fans 250 is disposed to be exposed outside of the casing 310. It should be noted that, in the storage battery unit 200, the cover member 280 is attached to the casing 210. A handle 280a used by the worker is provided in the cover member 280 when the storage battery unit 200 is inserted. Furthermore, a net-shaped cover member 290a is provided in the cover member 290. By providing the net-shaped cover member 290a, it is possible to make it easier for the heat of the storage battery 120 to escape outside of the storage battery unit 200.

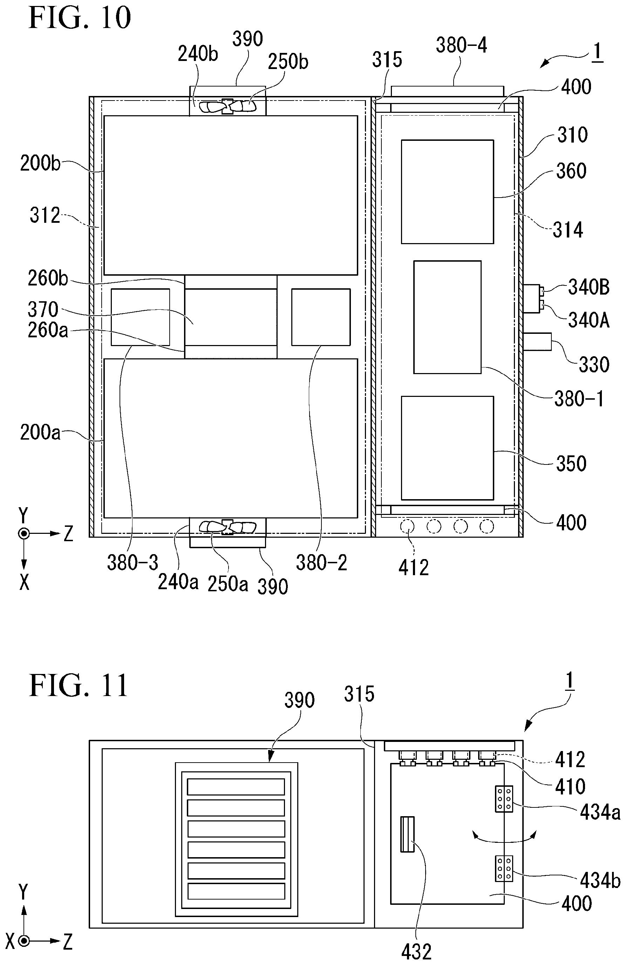

FIG. 10 is a schematic cross-sectional view corresponding to line X-X of FIG. 9.

For example, a first region 312 and a second region 314 are provided in the casing 310 of the power storage device 1 for the vehicle. The first region 312 is a region in which two storage battery units 200a and 200b are installed. The second region 314 is a region in which a main circuit device 350 to which electric power is supplied by the storage battery unit 200 and a control circuit device 360 which performs various control such as operation control for the storage battery unit 200 are installed. For example, electric parts such as fuses and contactors are provided in the main circuit device 350. Furthermore, for example, electric parts such as a control unit, a control power source, and a relay are provided in the control circuit device 360.

In the casing 310, a partition wall 315 which isolates a space in which two storage battery units 200a and 200b are accommodated from a space in which the main circuit device 350 and the control circuit device 360 are accommodated is provided. The partition wall 315 is a plate-shaped wall having an XY plane. The partition wall 315 has a predetermined thickness in the Z direction. The partition wall 315 has an opening portion through which a wiring passes between the space in which the two storage battery units 200a and 200b are accommodated and the space in which the main circuit device 350 and the control circuit device 360 are accommodated.

By isolating the main circuit device 350 and the control circuit device 360 from the two storage battery units 200a and 200b and accommodating the main circuit device 350 and the control circuit device 360, a circuit device side does not receive the influence of the storage battery unit 200 and it is possible to secure safety even when the worker maintains the electric parts and exchanges the storage battery unit 200.

A main circuit connector 330 which electrically connects the main circuit device 350 and an external device and control circuit connectors 340A and 340B which electrically connect the control circuit device 360 and an external device are provided in the power storage device 1 for the vehicle.

The exhaust port 370 is provided in the casing 310. The exhaust port 370 is joined to the exhaust port 260a of the storage battery unit 200a and the exhaust port 260b of the storage battery unit 200b and discharges air suctioned using the fans 250a and 250b outside (in the -Y direction) of the power storage device 1 for the vehicle. In the casing 310 of the power storage device 1 for the vehicle, a cover member 380 which prevents contact with the storage battery unit 200, the main circuit device 350, and the control circuit device 360 is provided on a side surface, a bottom surface, and the like. Attachable/detachable cover members 380-1 to 380-3 are provided on a bottom surface of the casing 310. An attachable/detachable cover member 380-4 is provided on a side surface of the casing 310.

The cover member 380-1 is a member in the bottom surface of the casing 310 which covers the opening portions provided between the positions in which the main circuit device 350 and the control circuit device 360 in the second region 314 are accommodated. The cover member 380-1 has a quadrangular plate shape corresponding to a shape of the opening portions. By removing the cover member 380-1, the worker can put his/her hand into the second region 314 through an opening portion provided in the bottom surface of the casing 310 and perform internal wiring work and the like.

The cover members 380-2 and 380-3 are members in the bottom surface of the casing 310 which cover two opening portions provided between the positions in which the two storage battery units 200a and 200b in the first region 312 are accommodated. The two opening portions are provided in the same shape at positions sandwiching the exhaust port 370. The cover members 380-2 and 380-3 have, for example, a quadrangular plate shape corresponding to the shape of the opening portions. By removing the cover members 380-2 and 380-3, the worker can put his/her hand into the first region 312 and perform wiring work and the like.

The cover member 380-4 is a member on a side surface (the YZ plane) of the casing 310 which covers an opening portion provided between the positions in which the control circuit device 360 in the second region 314 is accommodated. The cover member 380-4 has a quadrangular plate shape corresponding to the opening portion. By removing the cover member 380-4, the worker can operate the control circuit device 360 provided in the second region. Since the control circuit device 360 has a lower voltage than that of the main circuit device 350, there is no possibility of an electric shock or the like even when the worker's hand directly touches the control circuit device 360.

In the casing 310, the seal member such as a packing is provided at a contact portion between the casing 310 and the storage battery unit 200. Thus, in the casing 310, it is possible to block between a space in which the storage battery unit 200 is present and a space in which the exhaust port 370 or/and the cover members 380-2 and 380-3 are present and it is possible to prevent moisture, dust, and the like from entering into the storage battery unit 200 when the exhaust port 370 or the cover members 380-2 and 380-3 are opened.

FIG. 11 is a diagram of the power storage device 1 for the vehicle in the embodiment viewed from a lateral surface side on which the fans and the main circuit device are provided.

A filter unit 390 disposed on an air suction side of the fan 250a is provided on a surface side having the fans 250a and 250b of the casing 310 in the power storage device 1 for the vehicle. The filter unit 390 is connected to protruding portions of the accommodation portions 240a and 240b in the casing 210 which accommodates the fan 250a and the fan 250b. By providing the filter unit 390, it is possible to prevent dust and the like from the outside from entering into the casing 310 and it is possible to improve the safety of the power storage device 1 for the vehicle.

Also, in the second region 314 of the casing 310, a door 400 is provided in the front surface of the main circuit device 350. By opening the door 400 provided in the casing 310, the worker can touch the main circuit device 350. However, since the main circuit device 350 normally has a high voltage, the worker is likely to be subjected to an electric shock when performing maintenance of electric parts and wiring work with the storage battery unit 200. Thus, an interlock mechanism is provided in the power storage device 1 for the vehicle to restrict the opening and closing of the door 400, thereby preventing an electric shock.

The door 400 includes, for example, a handle part 432 by which the worker opens and closes the door 400. The door 400 and the cover member 380 are connected to a side surface of the casing 310 using hinges 434a and 434b. Here, when an operator holds the handle part 432 and pulls on the door 400, the door 400 rotates with respect to the hinges 434a and 434b to open and close. However, when a plug 410 is attached to a receptacle 412 provided in a top surface 310a of the casing 310, a part of the plug 410 is present at a position in which the plug 410 blocks a trajectory along which the door 400 passes due to the rotation operation thereof. For this reason, the door 400 cannot be opened.

It should be noted that, in the embodiment, four receptacles 412 are provided so that four plugs 410 can be installed as an interlock function. Therefore, when the plug 410 is installed in at least one of the four receptacles 412, the door 400 cannot be opened. The filter unit 390 and the plug 410 will be described in detail below.

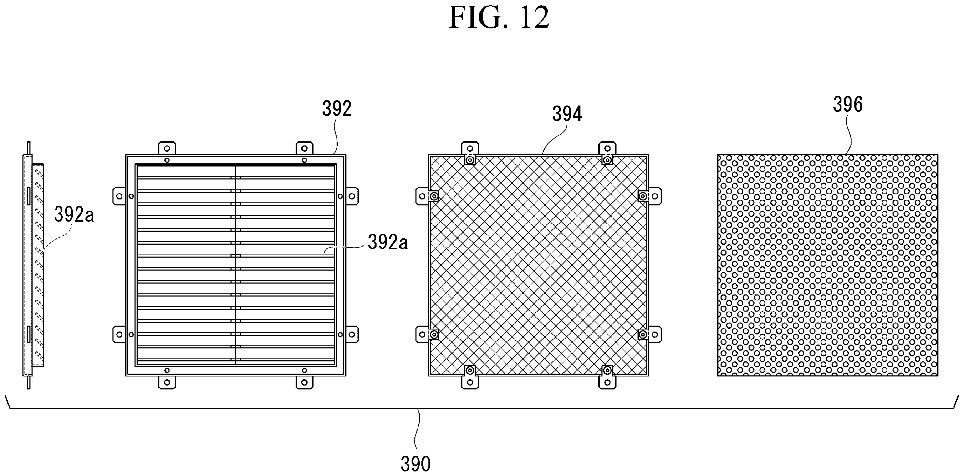

FIG. 12 is a diagram illustrating an example of a filter unit in the embodiment.

In the filter unit 390, a first filter unit 392, a second filter unit 394, and a third filter unit 396 are disposed side by side in this order from the outer side of the power storage device 1 for the vehicle toward a direction of the fan 250.

The first filter unit 392 is a so-called louver filter. In the first filter unit 392, a plurality of blade plates 392a having a narrow width are obliquely arranged with a predetermined inclination outward from the upper portion toward the lower portion. Thus, the first filter unit 392 includes a plurality of rectangular opening portions formed therein. The first filter unit 392 is made of, for example, a metal such as iron and stainless steel. The first filter unit 392 can prevent rain, snow, leaves, and the like from entering the casing 310 of the power storage device 1 for the vehicle.

The second filter unit 394 is a filter formed in a mesh shape having a narrow opening portion as compared with the first filter unit 392. The second filter unit 394 may be made of, for example, a metal such as iron and stainless steel or may be made of a resin or the like. The second filter unit 394 may be formed of a punching plate obtained by forming holes opened with a predetermined small aperture in an iron plate or the like. It is possible for the second filter unit 394 to prevent further fine dust from entering the casing 310 of the power storage device 1 for the vehicle.

The third filter unit 396 is a filter formed in a fine porous shape as compared with the second filter unit 394. The third filter unit 396 is made for, for example, a filter material such as a sponge. It is possible for the third filter unit 396 to prevent small dust and the like from entering the casing 310 of the power storage device 1 for the vehicle.

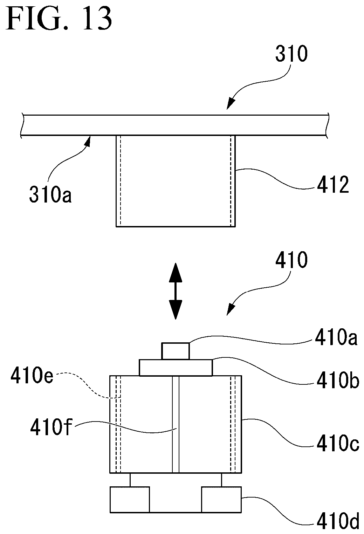

FIG. 13 is a diagram illustrating an example of the plug in the embodiment.

As an example of the above-described interlock mechanism, the receptacle 412 is provided in the front surface of the door 400 so that the plug 410 is installed at a position in which the plug 410 blocks a trajectory along which the door 400 passes when the door 400 opens. The receptacle 412 is provided in the top surface 310a in the casing 310. The plug 410 may have, for example, a cylindrical shape or a tubular shape such as a rectangular parallelepiped. The plug 410 includes, for example, an end portion 410a, a conducting part 410b, a main body part 410c, and a handle part 410d.

The end portion 410a is a portion to be brought into contact with a tubular interior of the receptacle 412 into which the plug 410 is inserted. A control line is provided at the end portion 410a and the main circuit device 350 is notified of information on the presence or absence of the plug using an electric signal in incorporation with the installation of the plug 410 to the receptacle 412 or the removal thereof from the receptacle 412 through on/off of this control line.

The conducting part 410b is made of a conductive metal and is formed of a metal or the like through which electricity is conducted between a wiring extending from the storage battery unit 200 and a wiring extending from the main circuit device 350 at the time of insertion. The main body part 410c includes a cylindrical concave portion 410e provided therein. By inserting the receptacle 412 into the concave portion 410e, a surface of the receptacle 412 is brought into contact with an inner surface of the concave portion 410e and the plug 410 is installed in the receptacle 412. It should be noted that a line 410f for positioning the plug 410 and the receptacle 412 at the time of installation may be provided on a surface of the main body part 410c. The handle part 410d is a portion held by the worker to attach/detach the plug 410 to/from the receptacle 412.

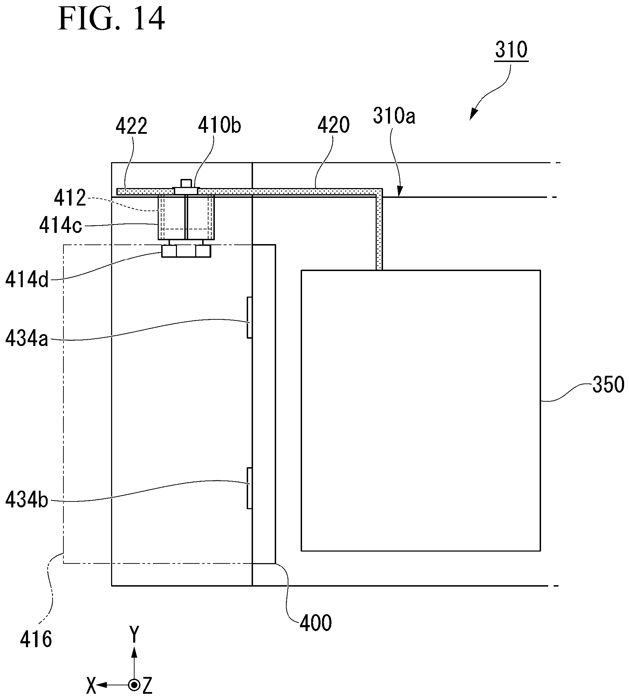

FIG. 14 is a diagram explaining an electrical connection state when the plug in the embodiment is installed.

A wiring extending from the main circuit device 350 is provided on the top surface 310a in the casing 310. For example, when the plug 410 is installed in the receptacle 412, a wiring 420 extending from the main circuit device 350 is connected to a wiring 422 on the storage battery unit 200 side via the conducting part 410b. Thus, it is possible to electrically connect the wirings. It should be noted that, in the case where the plug 410 is installed in the receptacle 412, since the handle part 410d of the plug 410 is present in a trajectory 416 when the door 400 opens , the door 400 cannot be opened.

On the other hand, when the plug 410 is removed from the receptacle 412, the wiring 420 and the wiring 422 are electrically disconnected. Therefore, electric power to the main circuit device 350 and the like supplied from the storage battery unit 200 and the like is cut off.

For example, when the plug 410 is not installed in all of the four receptacles 412 provided in advance, the plug 410 which blocks a trajectory along which the door 400 passes due to the rotation operation thereof is not present. For this reason, the operator can open the door 400 by holding the handle part 432.

With the above-described constitution, when the plug 410 is removed from the receptacle 412, a voltage can be physically separated from the main circuit device 350 to which a high voltage is applied by the storage battery unit 200 and the door 400 can be opened. Therefore, for example, it is possible to secure the safety of the worker at the time of handling the electric parts when performing maintenance on the main circuit device 350.

Also, a moisture conditioner for the purpose of measuring against humidity may be provided on each of rear surface portions of the above cover members 380-1 to 380-4 and door 400. The moisture conditioner has reversible characteristics of repeating moisture absorption and moisture release in accordance with the humidity inside the power storage device 1 for the vehicle. The moisture conditioner is prevented from falling out by a frame-shaped fixing plate.

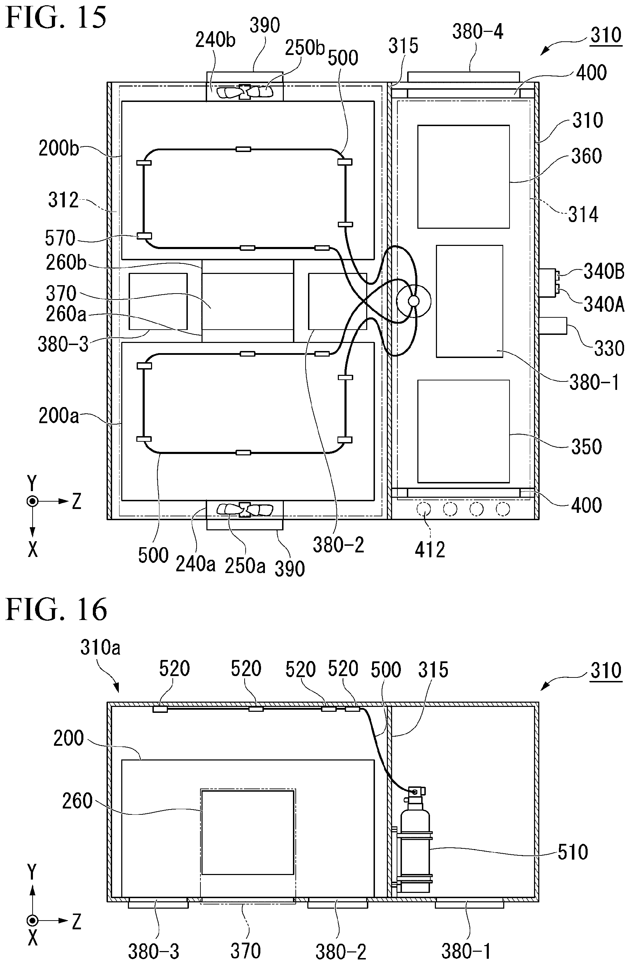

Also, a fire-extinguishing pipe may be provided in the power storage device 1 for the vehicle in the embodiment to prevent fire due to high temperature and the like of the storage battery unit 200. The fire-extinguishing pipe will be described below with reference to FIGS. 15 and 16.

FIG. 15 is a diagram explaining an attachment state of the fire-extinguishing pipe when the power storage device for the vehicle in the embodiment is viewed from above.

A fire-extinguishing pipe 500 is attached to upper surfaces of the storage battery units 200a and 200b in accordance with the shape of the storage battery units 200a and 200b accommodated in the first region 312 of the casing 310. The fire-extinguishing pipe 500 is connected to a fire extinguisher 510 provided in the second region 314. The fire-extinguishing pipe 500 is a pipe which is filled with an extinguishing agent which is pressurized through pressurization by the fire extinguisher 510 supplied from the fire extinguisher 510. The fire-extinguishing pipe 500 may be filled with an extinguishing agent which is not pressured. The extinguishing agent may be, for example, a gas, a liquid to be vaporized due to the contact with air, or a powdery solid.

FIG. 16 is a diagram explaining an attachment state of the fire-extinguishing pipe when the power storage device for the vehicle in the embodiment is viewed from the side.

The fire-extinguishing pipe 500 is attached to the top surface 310a in the casing 310. A hook member 520 is provided on the top surface 310a. The worker can attach the fire-extinguishing pipe 500 to the top surface 310a by hooking the fire-extinguishing pipe 500 to the hook member 520. It should be noted that the disposition and the number of hook members 520 are limited to the examples illustrated in the drawings.

Also, the fire-extinguishing pipe 500 is a tube made of a resin which can be melted, for example, when the surrounding temperature is equal to or higher than a predetermined temperature. Therefore, in the fire-extinguishing pipe 500, when the temperature of the storage battery unit 200 is equal to or higher than a predetermined temperature, the fire-extinguishing pipe 500 on the top surface 310a of that portion melts and the extinguishing agent can be dispersed from the inside of the pipe. Furthermore, by pressurizing the inside of the pipe, it is possible to disperse the extinguishing agent over a wide range. Thus, for example, even when the temperature of the storage battery unit 200 is high, it is possible to prevent fire and the like.

The above-described storage battery module 100 in the embodiment includes the plurality of storage batteries 120, the plate-shaped member 110 having the plurality of storage batteries 120 placed thereon, and the fins 114 which perform heat exchange. The storage battery module 100 is disposed at a position corresponding to each of the plurality of storage batteries 120 inside the plate-shaped member 110, is drawn from the surface on which the plurality of storage batteries 120 in the plate-shaped member 110 are placed, and is connected to the fins 114 on the outer portion of the plate-shaped member 110, thereby realizing space-saving.

### DESCRIPTION OF REFERENCE NUMERAL

1 Power storage device for vehicle
100 Storage battery module
110 Plate-shaped member
112 Heat pipe
114 Fin (heat-exchanger)
120 Storage battery
130, 132 Fixing member
130a, 142c, 142d Through-hole
130-1a First partition plate
130-1b Second partition plate
130-1f, 130-1g Fixing frame
140 Bracket (second bracket)
141 Main body wall
142a First end wall
142b Second end wall
144 Screw
145 Screw insertion tube
150 Auxiliary bracket (first bracket)
160 Attaching bracket
170 Connection plate
200 Storage battery unit
210, 310 Casing
315 Partition wall
220 Opening portion
240 Accommodation portion
250 Fan
255 Wall plate (attachment target surface)
255b Female screw portion (fixed portion)
260, 370 Exhaust port
310a Top surface
312 First region
314 Second region
320 Insertion port
350 Main circuit device
360 Control circuit device
380 Cover member
390 Filter unit
392 First filter unit
392a Blade plate
394 Second filter unit
396 Third filter unit
400 Door
410 Plug
500 Fire-extinguishing pipe

## Claims

1. A storage battery module (100), comprising:
a plurality of storage batteries (120);
a quadrangular plate-shaped member (110) which has the plurality of storage batteries (120) placed thereon and extends in a direction X, configured to intersect an attachment target surface having a fixed portion (255b);
a first partition plate (130-1a) which stands upright to face the attachment target surface from an end portion of the plate-shaped member (110) on the attachment target surface side and is configured to be in contact with the attachment target surface;
a heat-exchanger (114) which is attached to the first partition plate (130-1a) and performs heat exchange; and
a plurality of heat pipes (112) disposed at positions corresponding to the plurality of storage batteries (120) inside the plate-shaped member (110);
**characterized in that** the storage battery module (100) further comprises:
first brackets (150) which are provided to span between the plate-shaped member (110) and the first partition plate (130-1a) and are configured to be disposed on both sides of the attachment target surface in a planar direction of the plate-shaped member (110); and
second brackets (140) which extend from the first partition plate (130-1a) in a direction in which the plate-shaped member (110) extends and are disposed at the same position as a disposition position of each of the first brackets (150),
wherein the first brackets (150) and the second brackets (140) are disposed at a position in which they overlap in the direction X;
wherein the plurality of heat pipes (112) are drawn out from a surface on which the plurality of storage batteries (120) in the plate-shaped member (110) are placed and are connected to the heat-exchanger (114) outside of the plate-shaped member (110),
each of the first brackets (150) is fixed to the plate-shaped member (110) and the first partition plate (130-1a),
each of the second brackets (140) includes:
a main body wall (141) which is formed in a rectangular shape long in the extending direction thereof and fixed to the plate-shaped member (110);
first end walls (142a) which are bent and extend from an end portion of the main body wall (141) on the first partition plate side to face the first partition plate (130-1a) and fixed to the first partition plate (130-1a);
second end walls (142b) which are bent and extend from an end portion of the main body wall (141) on a side opposite to the first partition plate (130-1a) to face each of the first end walls (142a) in the extending direction; and
at least one screw insertion tube (145) which extends in the extending direction to span between the first end wall (142a) and each of the second end walls (142b) and through which a screw (144) is able to be inserted,
through-holes (130a, 142c, 142d) which communicate with the screw insertion tubes (145) are formed in the first partition plate (130-1a), the first end wall (142a), and the second end wall (142b), and
the screw (144) is inserted through the through-hole (142d) of the second end wall (142b), each of the screw insertion tubes (145), the through-hole (142c) of the first end wall (142a), and the through-hole (130a) of the first partition plate (130-1a) in this order and is configured to be fixed to the fixed portion (255b) of the attachment target surface.

2. The storage battery module (100) according to Claim 1, comprising:
a connection plate (170) which extends to span between the second brackets (140) disposed on both sides of the plate-shaped member (110) and joins the first end walls (142a) in each of the second brackets (140),
wherein the connection plate (170) is in contact with the first partition plate (130-1a).

3. The storage battery module (100) according to Claim 1 or 2, wherein the plate-shaped member (110) and the main body wall (141) are connected via an attaching bracket (160).

4. The storage battery module (100) according to any one of Claims 1 to 3, further comprising:
a second partition plate (130-1b) which is provided at a position between the storage batteries (120) and the heat-exchanger (114) at a position closer to the storage battery (120) than the first partition plate (130-1a); and
two fixing frames (130-1f, 130-1g) having an L-shaped plate shape,
wherein the second partition plate (130-1b) is connected to the storage batteries (120),
a height of a position in which the plurality of heat pipes (112) are connected to the heat-exchanger (114) is different from a height of the plate-shaped member (110) in a space partitioned by the first partition plate (130-1a) and the second partition plate (130-1b),
the first partition plate (130-1a) and the second partition plate (130-1b) are joined to one ends of different fixing frames (130-1f, 130-1g) of the two fixing frames (130-1f, 130-1g) at positions higher than that of the heat pipe (112) provided in a space partitioned by the first partition plate (130-1a) and the second partition plate (130-1b), and
the two fixing frames (130-1f, 130-1g ) joined to each other are joined by the other ends which are not joined to the first partition plate (130-1a) and the second partition plate (130-1b).

5. A storage battery unit (200), comprising:
the storage battery module (100) according to any one of Claims 1 to 3;
a casing (210, 310) in which a plurality of the storage battery modules (100) are accommodated in a state in which a heat-exchanger (114) of the storage battery module (100) is directed in one direction; and
fans (250) which send air to the heat-exchanger (114) which is directed in the one direction,
wherein the casing (210, 310) includes a wall plate (255) which isolates a storage battery (120) from the heat-exchanger (114) while accommodating the storage battery module (100), and
the wall plate (255) includes the attachment target surface.

6. A power storage device (1) for a vehicle, comprising:
the two storage battery units (200) according to Claim 5;
a casing (210, 310) in which the two storage battery units (200) are accommodated in a state in which the fans (250) are exposed;
a main circuit device (350) which is accommodated in the casing (210, 310) to be isolated from the two storage battery units (200) using a partition wall (315) and supplied with electric power by the storage battery unit (200); and
a control circuit device (360) which is accommodated in the casing (210, 310) to be isolated from the two storage battery units (200) using a partition wall (315) and performs operation control on the storage battery unit (200).

7. The power storage device (1) for a vehicle according to Claim 6, further comprising:
a door (400) provided in the casing (210, 310): and
a plug (410) installed at a position in which the plug (410) blocks a trajectory along which the door (400) passes when the door (400) opens,
wherein the plug (410) electrically connects a wiring of the main circuit device (350) and a wiring of the storage battery module (100) by connecting the wiring extending from the main circuit device (350) and the wiring extending from the storage battery unit (200).

8. The power storage device (1) for a vehicle according to Claim 6 or 7, further comprising:
a filter unit disposed on an air suction side of each of the fans (250),
wherein the filter unit includes a first filter unit (392) in which a plurality of opening portions (220) are formed by obliquely arranging a plurality of blade plates (392a), a second filter unit (394) formed in a mesh shape having a narrow opening portion (220) as compared with the first filter portion, and a third filter unit (396) formed in a fine porous shape as compared with the second filter unit (394) and the first filter unit (392), the second filter unit (394) and the third filter unit (396) being disposed side by side from the outer side of the power storage device (1) for a vehicle toward the fans (250).

9. The power storage device (1) for a vehicle according to any one of Claims 6 to 8, further comprising:
a fire-extinguishing pipe (500) filled with an extinguishing agent,
wherein the fire-extinguishing pipe (500) is attached to a top surface (310a) at least at a position in which the storage battery unit (200) is installed and melts when a temperature of the storage battery unit (200) is equal to or higher than a predetermined temperature so that the extinguishing agent is dispersed to the storage battery unit (200).

## Patentansprüche

1. Speicherbatteriemodul (100), das Folgendes umfasst:
mehrere Speicherbatterien (120);
ein viereckiges plattenförmiges Element (110), das die darauf platzierten mehreren Speicherbatterien (120) aufweist, sich in einer Richtung X erstreckt und dazu ausgestaltet ist, eine Befestigungszielfläche zu schneiden, die einen festen Abschnitt (255b) aufweist;
eine erste Trennplatte (130-1a), die aufrecht steht, um der Befestigungszielfläche von einem Endabschnitt des plattenförmigen Elements (110) auf der Seite der Befestigungszielfläche zugewandt zu sein, und dazu ausgestaltet ist, mit der Befestigungszielfläche in Kontakt zu sein;
einen Wärmetauscher (114), der an der ersten Trennplatte (130-1a) befestigt ist und Wärmeaustausch durchführt; und
mehrere Wärmerohre (112), die an Positionen, die den mehreren Speicherbatterien (120) entsprechen, im Inneren des plattenförmigen Elements (110) angeordnet sind;
**dadurch gekennzeichnet, dass** das Speicherbatteriemodul (100) ferner Folgendes umfasst:
erste Bügel (150), die bereitgestellt sind, um sich zwischen dem plattenförmigen Element (110) und der ersten Trennplatte (130-1) zu erstrecken, und dazu ausgestaltet sind, auf beiden Seiten der Befestigungszielfläche in einer ebenen Richtung des plattenförmigen Elements (110) angeordnet zu sein; und
zweite Bügel (140), die sich von der ersten Trennplatte (130-1a) in einer Richtung erstrecken, in der das plattenförmige Element (110) sich erstreckt, und an der gleichen Position wie eine Anordnungsposition von jeder der ersten Bügel (150) angeordnet sind,
wobei die ersten Bügel (150) und die zweiten Bügel (140) an einer Position angeordnet sind, in der sie sich in der Richtung X überlappen;
wobei die mehreren Wärmerohre (112) von einer Fläche herausgezogen sind, auf der die mehreren Speicherbatterien (120) in dem plattenförmigen Element (110) platziert sind, und mit dem Wärmetauscher (114) außerhalb des plattenförmigen Elements (110) verbunden sind,
jeder der ersten Bügel (150) an dem plattenförmigen Element (110) und der ersten Trennplatte (130-1a) befestigt ist,
jeder der zweiten Bügel (140) Folgendes umfasst:
eine Hauptkörperwand (141), die in einer rechtwinkligen Form entlang ihrer Erstreckungsrichtung gebildet ist und an dem plattenförmigen Element (110) befestigt ist;
erste Endwände (142a), die gekrümmt sind und sich von einem Endabschnitt der Hauptkörperwand (141) auf der Seite der ersten Trennplatte erstrecken, um der ersten Trennplatte (130-1a) zugewandt und an der ersten Trennplatte (130-1a) befestigt zu sein;
zweite Endwände (142b), die gekrümmt sind und sich von einem Endabschnitt der Hauptkörperwand (141) auf einer Seite entgegengesetzt zur ersten Trennplatte (130-1a) erstrecken, um jeder der ersten Endwände (142a) in der Erstreckungsrichtung zugewandt zu sein; und
mindestens ein Schraubeneinführungsrohr (145), das sich in der Erstreckungsrichtung erstreckt, um sich zwischen der ersten Endwand (142a) und jeder der zweiten Endwände (142b) zu überspannen, und durch das eine Schraube (144) eingesetzt werden kann,
Durchgangslöcher (130a, 142c, 142d), die mit den Schraubeneinführungsrohren (145) verbunden sind, in der ersten Trennplatte (130-1a), der ersten Endwand (142a) und der zweiten Endwand (142b) gebildet sind, und
die Schraube (144) in dieser Reihenfolge durch das Durchgangsloch (142d) der zweiten Endwand (142b), jedes von den Schraubeneinführungsrohren (145), das Durchgangsloch (142c) der ersten Endwand (142a) und das Durchgangsloch (130a) der ersten Trennplatte (130-1a) eingeführt ist und dazu ausgestaltet ist, an dem festen Abschnitt (255b) der Befestigungszielfläche befestigt zu sein.

2. Speicherbatteriemodul (100) nach Anspruch 1, das Folgendes umfasst:
eine Verbindungsplatte (170), die sich erstreckt, um sich zwischen den zweiten Bügeln (140), die auf beiden Seiten des plattenförmigen Elements (110) angeordnet sind, zu überspannen, und die ersten Endwände (142a) in jedem der zweiten Bügel (140) verbindet,
wobei die Verbindungsplatte (170) mit der ersten Trennplatte (130-1a) in Kontakt ist.

3. Speicherbatteriemodul (100) nach Anspruch 1 oder 2, wobei das plattenförmige Element (110) und die Hauptkörperwand (141) über einen Befestigungsbügel (160) verbunden sind.

4. Speicherbatteriemodul (100) nach einem der Ansprüche 1 bis 3, das ferner Folgendes umfasst:
eine zweite Trennplatte (130-1b), die an einer Position zwischen den Speicherbatterien (120) und dem Wärmetauscher (114) an einer Position bereitgestellt ist, die näher an der Speicherbatterie (120) liegt als die erste Trennplatte (130-1a); und
zwei Fixierungsrahmen (130-1f, 130-1g), die eine L-förmige Plattenform aufweisen,
wobei die zweite Trennplatte (130-1b) mit den Speicherbatterien (120) verbunden ist,
eine Höhe einer Position, in der die mehreren Wärmerohre (112) mit dem Wärmetauscher (114) verbunden sind, sich von einer Höhe des plattenförmigen Elements (110) in einem Raum unterscheidet, der durch die erste Trennplatte (130-1a) und die zweite Trennplatte (130-1b) getrennt ist,
die erste Trennplatte (130-1a) und die zweite Trennplatte (130-1b) an Enden verschiedener Fixierungsrahmen (130-1b, 130-1g) der zwei Fixierungsrahmen (130-1f, 130-1g) an Positionen verbunden sind, die höher sind als diejenige des Wärmerohrs (112), das in einem Raum bereitgestellt ist, der durch die erste Trennplatte (130-1a) und die zweite Trennplatte (130-1b) getrennt ist, und
die zwei Fixierungsrahmen (130-1f, 130-1g), die miteinander verbunden sind, durch die anderen Enden verbunden sind, die nicht mit der ersten Trennplatte (130-1a) und der zweiten Trennplatte (130-1b) verbunden sind.

5. Speicherbatterieeinheit (200), die Folgendes umfasst:
ein Speicherbatteriemodul (100) nach einem der Ansprüche 1 bis 3;
ein Gehäuse (210, 310), in dem mehrere der Speicherbatteriemodule (100) in einem Zustand untergebracht sind, in dem ein Wärmetauscher (114) des Speicherbatteriemoduls (100) in eine Richtung gerichtet ist; und
Lüfter (250), die Luft zum Wärmetauscher (114) schicken, der in die eine Richtung gerichtet ist,
wobei das Gehäuse (210, 310) eine Wandplatte (255) umfasst, die eine Speicherbatterie (120) von dem Wärmetaucher (114) isoliert, während das Speicherbatteriemodul (100) untergebracht ist, und
die Wandplatte (255) die Befestigungszielfläche umfasst.

6. Stromspeichervorrichtung (1) für ein Fahrzeug, die Folgendes umfasst:
die zwei Speicherbatterieeinheiten (200) nach Anspruch 5;
ein Gehäuse (210, 310), in dem die zwei Speicherbatterieeinheiten (200) in einem Zustand untergebracht sind, in dem die Lüfter (250) freiliegen;
eine Hauptschaltungsvorrichtung (350), die in dem Gehäuse (210, 310) untergebracht ist, um von den zwei Speicherbatterieeinheiten (200) unter Verwendung einer Trennwand (315) isoliert zu sein und von der Speicherbatterieeinheit (200) mit elektrischem Strom versorgt zu werden; und
eine Steuerschaltungsvorrichtung (360), die in dem Gehäuse (210, 310) untergebracht ist, um unter Verwendung einer Trennwand (315) von den zwei Speicherbatterieeinheiten (200) isoliert zu sein, und Betriebssteuerung auf der Speicherbatterieeinheit (200) durchzuführt.

7. Stromspeichervorrichtung (1) für ein Fahrzeug nach Anspruch 6, die ferner Folgendes umfasst:
eine Tür (400), die in dem Gehäuse (210, 310) bereitgestellt ist; und
einen Stecker (410), der an einer Position eingerichtet ist, in welcher der Stecker (410) eine Bewegungsbahn blockiert, welche die Tür (400) durchläuft, wenn die Tür (400) sich öffnet,
wobei der Stecker (410) eine Verdrahtung der Hauptschaltungsvorrichtung (350) und eine Verdrahtung des Speicherbatteriemoduls (100) durch Verbinden der Verdrahtung, die sich von der Hauptschaltungsvorrichtung (350) erstreckt, und der Verdrahtung, die sich von der Speicherbatterieeinheit (200) erstreckt, elektrisch verbindet.

8. Stromspeichervorrichtung (1) für ein Fahrzeug nach Anspruch 6 oder 7, die ferner Folgendes umfasst:
eine Filtereinheit, die an einer Luftansaugseite von jedem der Lüfter (250) angeordnet ist,
wobei die Filtereinheit eine erste Filtereinheit (392), in der mehrere Öffnungsabschnitte (220) durch schräges Anordnen mehrerer Lamellenplatten (392a) gebildet sind, eine zweite Filtereinheit (394), die in einer Gitterform gebildet ist, die einen im Vergleich mit dem ersten Filterabschnitt schmalen Öffnungsabschnitt (220) aufweist, und eine dritte Filtereinheit (396) umfasst, die in einer im Vergleich mit der zweiten Filtereinheit (394) und der ersten Filtereinheit (392) feinporigen Form gebildet ist, wobei die zweite Filtereinheit (394) und die dritte Filtereinheit (396) Seite an Seite von der Außenseite der Stromspeichervorrichtung (1) für ein Fahrzeug hin zu den Lüftern (250) angeordnet sind.

9. Stromspeichervorrichtung (1) für ein Fahrzeug nach einem der Ansprüche 6 bis 8, die ferner Folgendes umfasst:
ein Feuerlöschrohr (500), das mit einem Löschmittel gefüllt ist,
wobei das Feuerlöschrohr (500) an einer oberen Fläche (310a) an mindestens einer Position befestigt ist, in welcher die Speicherbatterieeinheit (200) eingerichtet ist, und, wenn eine Temperatur der Speicherbatterieeinheit (200) gleich oder höher als eine vorbestimmte Temperatur ist, schmilzt, derart dass das Löschmittel zur Speicherbatterieeinheit (200) zerstreut wird.

## Revendications

1. Module de batteries de stockage (100), comprenant :
une pluralité de batteries de stockage (120) ;
un élément en forme de plaque quadrangulaire (110) sur lequel sont placées la pluralité de batteries de stockage (120) et qui s'étend dans une direction X, configuré pour être en intersection avec une surface cible de raccordement comportant une partie fixe (255b) ;
une première plaque de séparation (130-1a) qui est verticale pour faire face à la surface cible de raccordement depuis une partie d'extrémité de l'élément en forme de plaque (110) sur le côté de surface cible de raccordement et est configurée pour être en contact avec la surface cible de raccordement ;
un échangeur de chaleur (114) qui est raccordé à la première plaque de séparation (130-1a) et réalise un échange de chaleur ; et
une pluralité de caloducs (112) disposés à des positions correspondant à la pluralité de batteries de stockage (120) à l'intérieur de l'élément en forme de plaque (110) ;
**caractérisé en ce que** le module de batteries de stockage (100) comprend en outre :
des premiers supports (150) qui sont prévus pour enjamber entre l'élément en forme de plaque (110) et la première plaque de séparation (130-1a) et qui sont configurés pour être disposés des deux côtés de la surface cible de raccordement dans une direction plane de l'élément en forme de plaque (110) ; et
des deuxièmes supports (140) qui s'étendent depuis la première plaque de séparation (130-1a) dans une direction dans laquelle l'élément en forme de plaque (110) s'étend et qui sont disposés à la même position qu'une position de disposition de chacun des premiers supports (150),
dans lequel les premiers supports (150) et les deuxièmes supports (140) sont disposés à une position à laquelle ils se chevauchent dans la direction X ;
dans lequel la pluralité de caloducs (112) sont tirés d'une surface sur laquelle sont placées la pluralité de batteries de stockage (120) dans l'élément en forme de plaque (110) et sont reliés à l'échangeur de chaleur (114) à l'extérieur de l'élément en forme de plaque (110),
chacun des premiers supports (150) est fixé à l'élément en forme de plaque (110) et à la première plaque de séparation (130-1a),
chacun des deuxièmes supports (140) inclut :
une paroi de corps principal (141) qui est formée dans une forme rectangulaire longue dans la direction d'extension de celle-ci et qui est fixée à l'élément en forme de plaque (110) ;
des premières parois d'extrémité (142a) qui sont pliées et qui s'étendent depuis une partie d'extrémité de la paroi de corps principal (141) sur le côté de première plaque de séparation pour faire face à la première plaque de séparation (130-1a) et qui sont fixées à la première plaque de séparation (130-1a) ;
des deuxièmes parois d'extrémité (142b) qui sont pliées et qui s'étendent depuis une partie d'extrémité de la paroi de corps principal (141) sur un côté opposé à la première plaque de séparation (130-1a) pour faire face à chacune des premières parois d'extrémité (142a) dans la direction d'extension ; et
au moins un tube d'insertion de vis (145) qui s'étend dans la direction d'extension pour enjamber entre la première paroi d'extrémité (142a) et chacune des deuxièmes parois d'extrémité (142b) et à travers lequel une vis (144) peut être insérée,
des trous traversants (130a, 142c, 142d) qui communiquent avec les tubes d'insertion de vis (145) sont formés dans la première plaque de séparation (130-1a), la première paroi d'extrémité (142a) et la deuxième paroi d'extrémité (142b), et
la vis (144) est insérée à travers le trou traversant (142d) de la deuxième paroi d'extrémité (142b), chacun des tubes d'insertion de vis (145), le trou traversant (142c) de la première paroi d'extrémité (142a), et le trou traversant (130a) de la première plaque de séparation (130-1a) dans cet ordre et est configurée pour être fixée à la partie fixe (255b) de la surface cible de raccordement.

2. Module de batteries de stockage (100) selon la revendication 1, comprenant :
une plaque de liaison (170) qui s'étend pour enjamber entre les deuxièmes supports (140) disposés des deux côtés de l'élément en forme de plaque (110) et rejoint les premières parois d'extrémité (142a) dans chacun des deuxièmes supports (140),
dans lequel la plaque de liaison (170) est en contact avec la première plaque de séparation (130-1a).

3. Module de batteries de stockage (100) selon la revendication 1 ou 2, dans lequel l'élément en forme de plaque (110) et la paroi de corps principal (141) sont reliés par l'intermédiaire d'un support de raccordement (160).

4. Module de batteries de stockage (100) selon l'une quelconque des revendications 1 à 3, comprenant en outre :
une deuxième plaque de séparation (130-1b) qui est prévue à une position entre les batteries de stockage (120) et l'échangeur de chaleur (114) à une position plus proche de la batterie de stockage (120) que la première plaque de séparation (130-1a) ; et
deux cadres de fixation (130-1f, 130-1g) présentant une forme de plaque en forme de L,
dans lequel la deuxième plaque de séparation (130-1b) est reliée aux batteries de stockage (120),
une hauteur d'une position à laquelle la pluralité de caloducs (112) sont reliés à l'échangeur de chaleur (114) est différente d'une hauteur de l'élément en forme de plaque (110) dans un espace séparé par la première plaque de séparation (130-1a) et la deuxième plaque de séparation (130-1b),
la première plaque de séparation (130-1a) et la deuxième plaque de séparation (130-1b) sont jointes à des extrémités de différents cadres de fixation (130-1f, 130-1g) parmi les deux cadres de fixation (130-1f, 130-1g) à des positions plus hautes que celle du caloduc (112) prévu dans un espace séparé par la première plaque de séparation (130-1a) et la deuxième plaque de séparation (130-1b), et
les deux cadres de fixation (130-1f, 130-1g) joints l'un à l'autre sont joints par les autres extrémités qui ne sont pas jointes à la première plaque de séparation (130-1a) et à la deuxième plaque de séparation (130-1b).

5. Unité de batteries de stockage (200), comprenant :
le module de batteries de stockage (100) selon l'une quelconque des revendications 1 à 3 ;
un boîtier (210, 310) dans lequel une pluralité des modules de batteries de stockage (100) sont logés dans un état dans lequel un échangeur de chaleur (114) du module de batteries de stockage (100) est dirigé dans une direction ; et
des ventilateurs (250) qui envoient de l'air vers l'échangeur de chaleur (114) qui est dirigé dans la direction,
dans lequel le boîtier (210, 310) inclut une plaque de paroi (255) qui isole une batterie de stockage (120) de l'échangeur de chaleur (114) tout en logeant le module de batteries de stockage (100), et
la plaque de paroi (255) inclut la surface cible de raccordement.

6. Dispositif de stockage d'énergie (1) pour un véhicule, comprenant :
les deux unités de batteries de stockage (200) selon la revendication 5;
un boîtier (210, 310) dans lequel les deux unités de batteries de stockage (200) sont logées dans un état dans lequel les ventilateurs (250) sont exposés ;
un dispositif de circuit principal (350) qui est logé dans le boîtier (210, 310) pour être isolé des deux unités de batteries de stockage (200) en utilisant une paroi de séparation (315) et alimenté en énergie électrique par l'unité de batteries de stockage (200) ; et
un dispositif de circuit de commande (360) qui est logé dans le boîtier (210, 310) pour être isolé des deux unités de batteries de stockage (200) en utilisant une paroi de séparation (315) et réalise une commande de fonctionnement sur l'unité de batteries de stockage (200).

7. Dispositif de stockage d'énergie (1) pour un véhicule selon la revendication 6, comprenant en outre :
une porte (400) prévue dans le boîtier (210, 310) ; et
une prise (410) installée à une position à laquelle la prise (410) bloque une trajectoire le long de laquelle la porte (400) passe lorsque la porte (400) s'ouvre,
dans lequel la prise (410) relie électriquement un câblage du dispositif de circuit principal (350) et un câblage du module de batteries de stockage (100) en reliant le câblage s'étendant depuis le dispositif de circuit principal (350) et le câblage s'étendant depuis l'unité de batteries de stockage (200).

8. Dispositif de stockage d'énergie (1) pour un véhicule selon la revendication 6 ou 7, comprenant en outre :
une unité de filtres disposée sur un côté d'aspiration d'air de chacun des ventilateurs (250),
dans lequel l'unité de filtres inclut une première unité de filtres (392) dans laquelle une pluralité de parties d'ouverture (220) sont formées par l'agencement obliquement d'une pluralité de plaques de pales (392a), une deuxième unité de filtres (394) formée dans une forme de maillage comportant une partie d'ouverture étroite (220) par rapport à la première partie de filtres, et une troisième unité de filtres (396) formée dans une forme poreuse fine par comparaison à la deuxième unité de filtres (394) et à la première unité de filtres (392), la deuxième unité de filtres (394) et la troisième unité de filtres (396) étant disposées côte à côte à partir du côté extérieur du dispositif de stockage d'énergie (1) pour un véhicule vers les ventilateurs (250).

9. Dispositif de stockage d'énergie (1) pour un véhicule selon l'une quelconque des revendications 6 à 8, comprenant en outre :
un tuyau d'extinction d'incendie (500) rempli d'un agent extincteur,
dans lequel le tuyau d'extinction d'incendie (500) est raccordé à une surface supérieure (310a) au moins à une position à laquelle l'unité de batteries de stockage (200) est installée et fond lorsqu'une température de l'unité de batteries de stockage (200) est supérieure ou égale à une température prédéterminée de sorte que l'agent extincteur soit dispersé sur l'unité de batteries de stockage (200).
